# FASCICULE DE BREVET EUROPEEN

(11) **EP 4 658 559 B1**
(45) Date de publication et mention de la délivrance du brevet: **18.11.2026**
(21) Numéro de dépôt: 24705725.0
(22) Date de dépôt: 31.01.2024
(51) Int. Cl.: B64C 11/38

(54) **MECANISME DE CHANGEMENT DE PAS AVEC DISPOSITIF DE VERROUILLAGE**
NEIGUNGSÄNDERUNGSMECHANISMUS MIT VERRIEGELUNGSVORRICHTUNG
PITCH-CHANGE MECHANISM WITH LOCKING DEVICE

(30) Priorité: 01.02.2023 FR 2300922
(43) Date de publication de la demande: 10.12.2025
(73) Titulaire: SAFRAN AIRCRAFT ENGINES, 75015 Paris (FR)
(72) Inventeur: RODA, Jean Charles Olivier, 77550 MOISSY-CRAMAYEL (FR); COTTET, Clément, 77550 MOISSY-CRAMAYEL (FR); BELJAMBE, Ceddric, 77550 MOISSY-CRAMAYEL (FR); FRANTZ, Caroline Marie, 77550 MOISSY-CRAMAYEL (FR)
(74) Mandataire: Regimbeau
(86) Numéro de dépôt international: PCT/FR2024/050125
(87) Numéro de publication internationale: WO 2024/161086

(56) Documents cités:
- GB-A- 818 612
- US-A1- 2014 294 585

## Description

### DOMAINE DE L'INVENTION

La présente invention concerne le domaine général des actionneurs destinés à la commande de l'orientation d'aubes à calage variable telles que celles équipant les soufflantes de certaines turbomachines.

Un domaine privilégié d'application de l'invention est celui des turboréacteurs à soufflante non carénée (mieux connus sous les appellations anglaises « propfan », « open fan », « open rotor » et « unducted fan »). Toutefois, l'invention s'applique également aux turbopropulseurs à une ou plusieurs hélices propulsives et aux turboréacteurs carénés avec aubes de soufflante à calage variable.

### ARRIERE-PLAN TECHNOLOGIQUE

Le document GB 818612 A décrit une hélice à pas variable comportant un moteur de variation de pas comprenant un piston et un cylindre, des moyens de réglage fin de pas pouvant acheminer un fluide hydraulique vers et depuis un côté de réglage fin de pas dudit moteur de variation de pas, des moyens de réglage grossier de pas pouvant acheminer le fluide hydraulique vers et depuis un côté de réglage grossier de pas dudit moteur de variation de pas, des premiers moyens d'arrêt agissant pour empêcher le mouvement relatif dudit piston et dudit cylindre afin de régler l'hélice à un pas inférieur à un premier pas prédéterminé, un deuxième moyen d'arrêt agissant pour empêcher le mouvement relatif dudit piston et dudit cylindre afin de régler l'hélice à un pas inférieur à un deuxième pas prédéterminé, qui est lui-même inférieur audit premier pas prédéterminé.

Une des voies actuellement explorées pour améliorer la consommation spécifique des moteurs d'avions civils est constituée par la mise au point de turboréacteurs à soufflante non carénée, tels que celui décrit dans le document FR 2 941 493. Ces turboréacteurs comportent un générateur de gaz de turbomoteur classique, dont un ou plusieurs étages de turbine entraînent une ou plusieurs soufflante(s) non carénée(s) s'étendant à l'extérieur de la nacelle du moteur.

Les aubes de cette ou de ces soufflante(s) sont, comme dans le cas des turbopropulseurs classiques, à calage variable, c'est à dire que la position angulaire de ces aubes (appelée angle de calage) peut être modifiée au cours du vol. Pour rappel, l'angle de calage d'une aube correspond à l'angle, dans un plan orthogonal à l'axe de pivotement de l'aube, entre l'axe de rotation de la soufflante et la corde de l'aube à 75% du rayon de la soufflante. Il peut varier d'une valeur sensiblement égale à 90°, correspondant à une position dite « voile » ou « à plat » de l'aube, à une valeur sensiblement égale à 0°, correspondant à une position dite « drapeau » de l'aube. Il peut également prendre une valeur strictement supérieure à 90°, typiquement sensiblement égale à 95°, correspondant à une position dite « reverse » de l'aube.

Comme il est connu, cette modification de l'angle de calage au cours du vol permet de faire évoluer la poussée du moteur et optimiser le rendement de la soufflante en fonction de la vitesse de l'aéronef. En effet, le régime des soufflantes est quasiment constant sur toutes les phases de fonctionnement, et c'est le calage des aubes qui fait varier la poussée. Ainsi, en phase de vol de croisière, les aubes sont orientées de sorte à ajuster la poussée en minimisant la puissance prélevée sur l'arbre de turbine et la consommation et en optimisant le rendement. A l'inverse, au décollage, les aubes sont orientées de sorte à maximiser la poussée afin d'accélérer puis de faire décoller l'avion.

Le pilotage de l'orientation des aubes est communément réalisé au moyen d'un mécanisme de changement de pas comprenant un vérin de commande comportant une partie mobile en translation suivant l'axe de la soufflante et un système de liaison reliant la partie mobile à l'aube de sorte à convertir la translation de la partie mobile en rotation de l'aube à calage variable.

Une difficulté rencontrée avec les aubes à calage variable est que, en cas de dysfonctionnement des systèmes pilotant leur orientation, lesdites aubes ont tendance, sous leur propre effet centrifuge, à se mettre en position voile. Or, une aube bloquée dans cette position génère peu de couple résistif et risque de faire partir le moteur en survitesse, avec des risques de dégradation potentiels du moteur. Au surplus, une aube bloquée dans cette position risque également de générer une traînée excessive et inacceptable pour la contrôlabilité de l'avion et/ou son rayon d'action dans le cas d'une mission de diversion.

Pour remédier à cette difficulté, il est connu de recourir à des systèmes de sécurité aptes à s'opposer au déplacement des aubes à calage variable vers les petits pas (c'est-à-dire vers la position voile) en cas de défaillance du système de commande de l'orientation des aubes. Un tel système est par exemple connu de EP 3 400 169.

On connaît notamment un système de sécurité intégrant au vérin commandant l'orientation des aubes un système vis-écrou du type vis à billes couplé à un écrou de verrouillage. En fonctionnement normal, l'écrou du système vis-écrou suit les déplacements du vérin de commande, entraînant ainsi la rotation de la vis autour de son axe, pendant que l'écrou de verrouillage suit le filetage de la vis sans jamais la toucher (le taraudage de l'écrou de verrouillage est conçu de sorte à ménager un léger jeu avec le filetage de la vis). En cas de dysfonctionnement du système de commande de l'orientation des aubes, la vis du système vis-écrou est immobilisée (sa rotation est bloquée) et l'écrou de verrouillage vient en prise avec ladite vis, empêchant ainsi le pivotement des aubes vers les petits pas.

Ce système de sécurité ne donne cependant pas entière satisfaction. En effet, il requiert, pour un bon fonctionnement, une gestion précise et complexe des jeux entre l'écrou de verrouillage et le filetage de la vis.

### EXPOSE DE L'INVENTION

Un objectif de l'invention est de permettre, de manière simple et robuste, le verrouillage de l'angle de calage des aubes dans au moins un sens. D'autres objectifs sont de permettre le verrouillage de l'angle de calage des aubes dans leur orientation courante (avec une certaine tolérance), de permettre le verrouillage en l'absence d'énergie d'alimentation du vérin, de permettre le verrouillage et/ou le déverrouillage avec une force peu importante, et de limiter l'encombrement du mécanisme de verrouillage.

A cet effet, l'invention a pour objet, selon un premier aspect, un mécanisme de changement de pas selon la revendication 1. Des modes de réalisation particuliers sont revendiqués dans les revendications dépendantes 2-7.

L'invention a également pour objet, selon un deuxième aspect, un rotor de soufflante pour turbomachine comprenant un moyeu et une pluralité d'aubes à calage variable chacune pivotable relativement au moyeu autour d'un axe de pivotement propre, le rotor comprenant en outre un mécanisme de changement de pas selon le premier aspect pour ajuster une position angulaire de chacune des aubes à calage variable autour de son axe de pivotement respectif.

L'invention a aussi pour objet, selon un troisième aspect, un moteur à turbine à gaz comprenant un rotor de soufflante selon le deuxième aspect.

L'invention a encore pour objet, selon un quatrième aspect, un aéronef comprenant au moins un moteur à turbine à gaz selon le troisième aspect.

Enfin, l'invention a pour objet, selon un cinquième aspect, un procédé de changement du pas des aubes d'un rotor de soufflante pour turbomachine, chacune pivotable relativement à un moyeu du rotor de soufflante autour d'un axe de pivotement propre, ledit procédé comprenant l'ajustement d'une position angulaire de chacune desdites aubes autour de son axe de pivotement respectif au moyen d'un mécanisme de changement de pas selon le premier aspect.

### BREVE DESCRIPTION DES FIGURES

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue de dessus d'un aéronef selon un exemple de réalisation de l'invention,
- la Figure 2 est une vue simplifiée en coupe longitudinale d'un moteur à turbine à gaz de l'aéronef de la Figure 1,
- la Figure 3 est une vue simplifiée partielle, en coupe longitudinale, d'un premier mode de réalisation d'un mécanisme de changement de pas du moteur à turbine à gaz de la Figure 2,
- la Figure 4 est une vue simplifiée partielle, en coupe longitudinale, d'une première variante d'un dispositif de verrouillage de pas du mécanisme de changement de pas de la Figure 3, ledit dispositif de verrouillage de pas étant dans une première configuration,
- la Figure 5 est une vue similaire à celle de la Figure 4, le dispositif de verrouillage de pas étant dans une deuxième configuration,
- la Figure 6 est une vue simplifiée suivant un axe radial d'un bras de mise en rotation d'une aube à calage variable de la turbomachine de la Figure 2,
- les Figures 7 et 8 sont des vues de face d'un organe de blocage du dispositif de verrouillage des Figures 4 et 5,
- la Figure 9 est une vue similaire à celle de la Figure 3 d'un deuxième mode de réalisation du mécanisme de changement de pas du moteur à turbine à gaz de la Figure 2,
- la Figure 10 est une vue simplifiée partielle, en coupe longitudinale, d'une première variante d'un dispositif de verrouillage de pas du mécanisme de changement de pas de la Figure 9, ledit dispositif de verrouillage de pas étant dans une première configuration,
- la Figure 11 est une vue similaire à celle de la Figure 10, le dispositif de verrouillage de pas étant dans une deuxième configuration,
- la Figure 12 est une vue simplifiée partielle, en coupe longitudinale, d'une deuxième variante du dispositif de verrouillage de pas du mécanisme de changement de pas de la Figure 9, ledit dispositif de verrouillage de pas étant dans une première configuration,
- la Figure 13 est une vue similaire à celle de la Figure 12, le dispositif de verrouillage de pas étant dans une deuxième configuration,
- la Figure 14 est une vue simplifiée partielle, en coupe longitudinale, d'une troisième variante du dispositif de verrouillage de pas du mécanisme de changement de pas de la Figure 9, ledit dispositif de verrouillage de pas étant dans une première configuration, et
- la Figure 15 est une vue similaire à celle de la Figure 14, le dispositif de verrouillage de pas étant dans une deuxième configuration.

### DESCRIPTION DETAILLEE D'UN EXEMPLE DE REALISATION

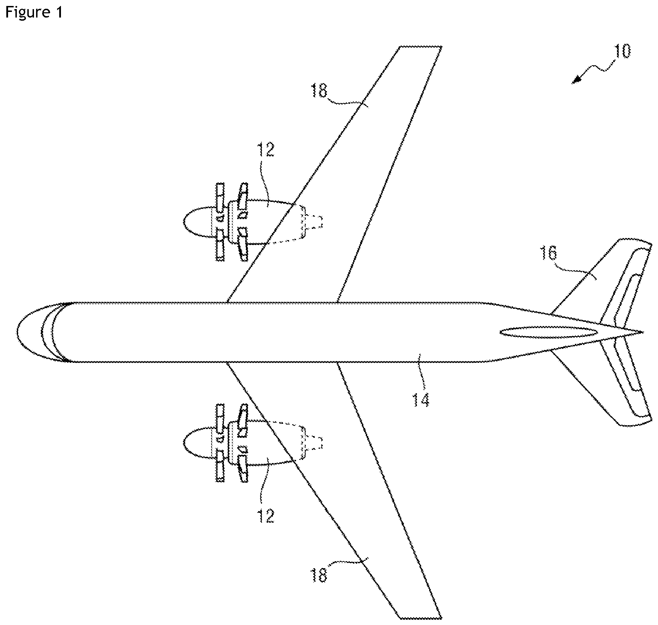

L'aéronef 10 représenté sur la Figure 1 comprend des turbomachines 12 formant moteurs à turbine à gaz pour le propulser.

Dans l'exemple représenté, l'aéronef 10 est un avion. Celui-ci comprend, de manière classique, un fuselage 14, un empennage 16 et deux ailes 18. Les moteurs à turbine à gaz 12 sont ici au nombre de deux et sont chacun logés sous une aile 18 respective. En variante (non représentée), les moteurs à turbine à gaz 12 sont disposés le long du fuselage 14, par exemple à proximité de l'empennage 16. En variante encore (également non représentée), l'aéronef 10 comprend un seul moteur à turbine à gaz 12 ou au moins trois moteurs à turbine à gaz 12.

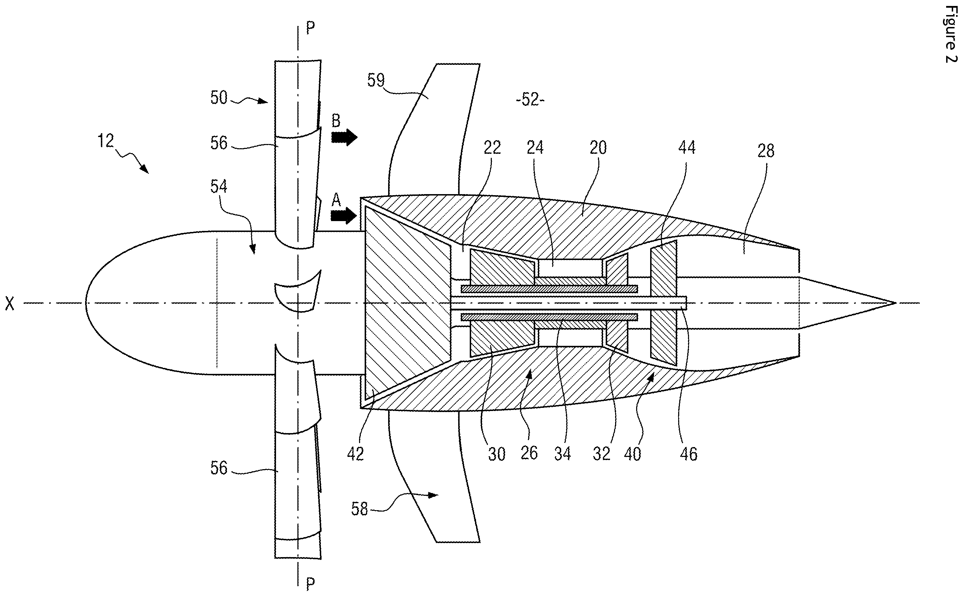

L'une des turbomachines 12 est représentée sur la Figure 2.

Comme visible sur cette Figure 2, la turbomachine 12 est allongée suivant un axe longitudinal X. Elle présente typiquement une symétrie angulaire autour dudit axe longitudinal X, c'est-à-dire qu'il existe au moins un angle pour lequel la turbomachine est invariante par rotation autour de l'axe longitudinal X.

Ici et dans la suite, les termes « intérieur » et « extérieur », « interne » et « externe », ainsi que leurs déclinaisons, s'entendent en référence à l'axe X, un élément qualifié de « intérieur » ou « interne » étant orienté vers l'axe X alors qu'un élément « extérieur » ou « externe » est orienté à l'opposé de l'axe X.

La turbomachine 12 comprend, de manière classique, une nacelle 20, une veine interne 22 de circulation d'un flux d'air à travers la nacelle 20, une chambre de combustion 24 logée dans la veine 22, un corps moteur 26 et une tuyère d'échappement des gaz 28.

Dans la suite, les termes « amont » et « aval » s'entendent en référence à un sens d'écoulement d'un flux d'air à travers la veine 22.

Le corps moteur 26 comprend un compresseur 30, une turbine 32 et un arbre de transmission 34 couplant la turbine 32 au compresseur 30 pour l'entraînement du compresseur 30 par la turbine 32. Le compresseur 30 est disposé en amont de la chambre de combustion 24 et alimente la chambre de combustion 24 en air comprimé. La turbine 32 est disposée en aval de la chambre de combustion 24 et reçoit les gaz d'échappement sortant de la chambre de combustion 24.

L'arbre de transmission 34 a pour axe de rotation l'axe longitudinal X.

L'arbre de transmission 34 est guidé en rotation par rapport à la nacelle 20 par le biais de paliers (non représentés).

Dans l'exemple représenté, la turbomachine 12 est une turbomachine à multiples corps, en particulier à double corps, comprenant un corps basse pression 40 en plus du corps moteur 26. Le corps moteur 26 constitue alors un corps haute pression, le compresseur 30 étant un compresseur haute pression, la turbine 32 étant une turbine haute pression et l'arbre de transmission 34 étant un arbre haute pression.

Le corps basse pression 40 comprend un compresseur basse pression 42, une turbine basse pression 44 et un arbre basse pression 46 couplant la turbine basse pression 44 au compresseur basse pression 42 pour l'entraînement du compresseur basse pression 42 par la turbine basse pression 44.

Le compresseur basse pression 42 est disposé en amont du compresseur haute pression 30 et alimente ce dernier en air comprimé. La turbine basse pression 44 est disposée en aval de la turbine haute pression 32 et reçoit les gaz d'échappement sortant de cette dernière.

L'arbre basse pression 46 est guidé en rotation par rapport à la nacelle 20 par le biais de paliers (non représentés).

L'arbre basse pression 46 est coaxial à l'arbre haute pression 34. Il a donc également pour axe de rotation l'axe longitudinal X. En particulier, l'arbre basse pression 46 s'étend à l'intérieur de l'arbre haute pression 34.

La turbomachine 12 comprend également une soufflante 50 pour entraîner le flux d'air dans une veine de circulation externe 52 entourant la nacelle 20. On distingue ainsi un flux d'air primaire A (chaud), constitué par la portion du flux d'air entraînée dans la veine de circulation interne 22, et un flux d'air secondaire B (froid), constitué par la portion du flux d'air entraînée dans la veine de circulation externe 52.

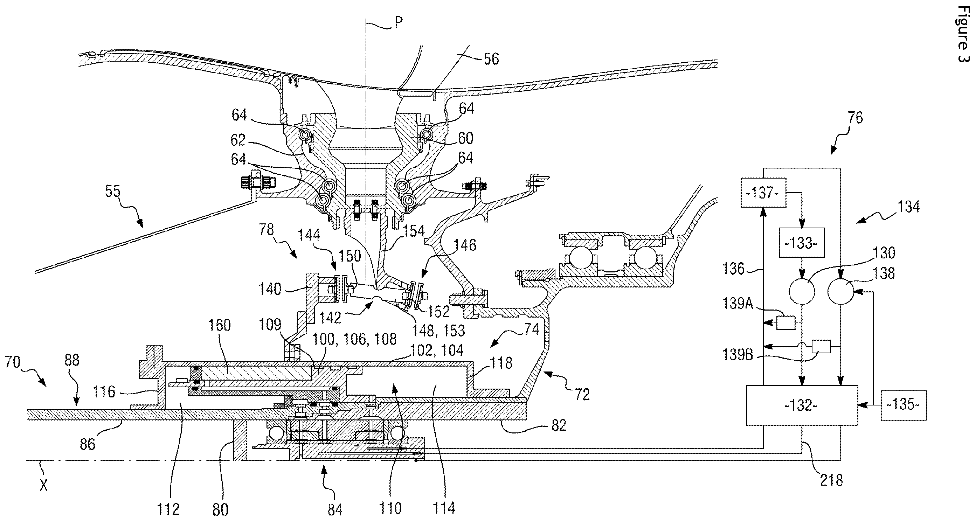

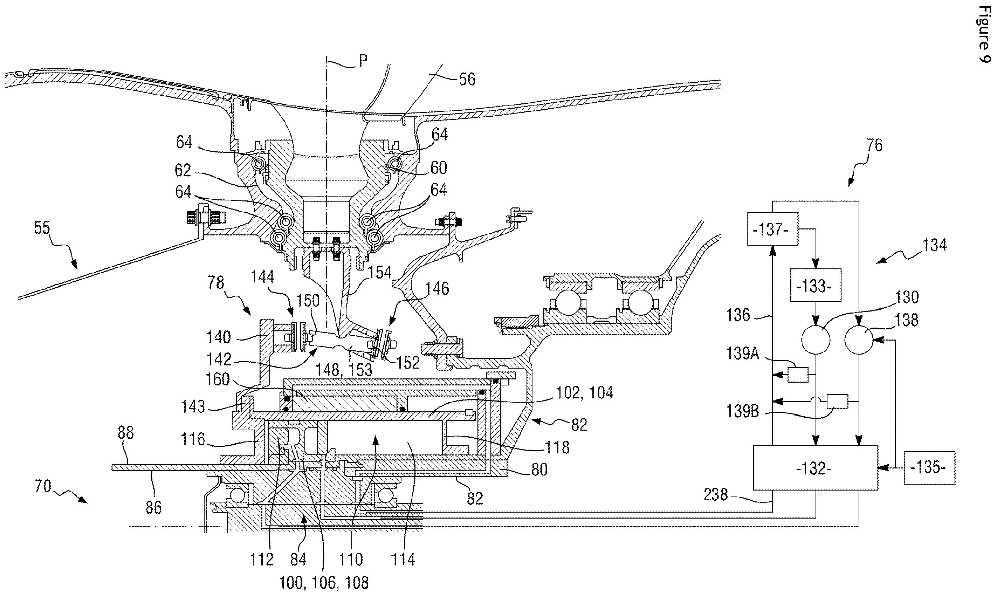

La soufflante 50 comprend un rotor de soufflante 54. Ce rotor de soufflante 54 est monté rotatif relativement à la nacelle 20 autour de l'axe longitudinal X. Il comprend un moyeu 55 (Figures 3 et 9) pourvu d'aubes de soufflante 56 s'étendant sensiblement radialement vers l'extérieur depuis le moyeu 55. Ces aubes 56, lorsqu'elles sont mises en rotation, entraînent le flux d'air dans la veine de circulation externe 52.

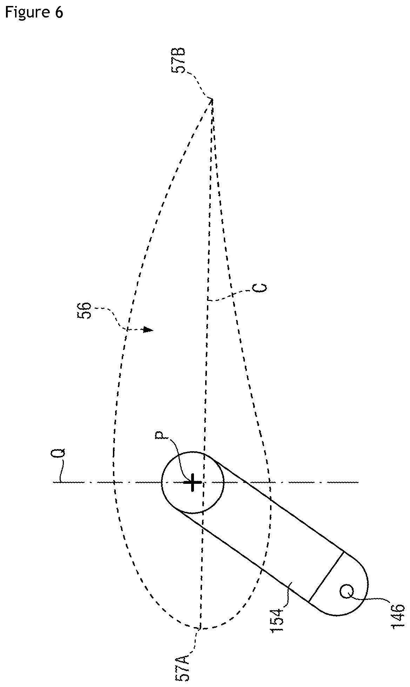

Comme visible sur la Figure 6, chaque aube 56 comprend un bord d'attaque 57A, un bord de fuite 57B et une corde C reliant le bord d'attaque 57A au bord de fuite 57B.

De retour à la Figure 2, le rotor de soufflante 54 est entraîné en rotation par la turbine basse pression 44, par l'intermédiaire de l'arbre basse pression 46. Cet entraînement se fait de préférence par l'intermédiaire d'un réducteur (non représenté) permettant au rotor de soufflante 54 de tourner à une vitesse inférieure à celle de l'arbre basse pression 46. En variante, cet entraînement est direct, c'est-à-dire que le rotor de soufflante 54 est solidaire en rotation de l'arbre basse pression 46.

Dans l'exemple représenté, la soufflante 50 comprend également un stator de soufflante 58 comprenant des aubes fixes 59 agencées à la périphérie de la nacelle 20, dans la veine de circulation externe 52, suivant un plan orthogonal à l'axe longitudinal X. Ce stator de soufflante 58 est ici agencé en aval du rotor de soufflante 54. En variante (non représentée), la soufflante 50 comprend, à la place du stator de soufflante 58, un rotor de soufflante contrarotatif.

Avantageusement, la soufflante 50 est, comme représenté, non carénée, c'est-à-dire que la veine de circulation externe 52 n'a aucune délimitation périphérique. La turbomachine 12 est alors constituée, comme représenté, par un turboréacteur à soufflante non carénée ou, en variante, par un turbopropulseur. En variante (non représentée), la veine de circulation externe 52 est définie entre la nacelle 20 et un carter de soufflante entourant la soufflante 50 ; la turbomachine 12 est alors typiquement constituée par un turboréacteur à fort taux de dilution (en anglais « bypass ratio »), le taux de dilution étant défini comme le rapport du débit du flux secondaire B (froid) sur le débit du flux primaire A (chaud).

Dans l'exemple représenté, la turbomachine 12 est en particulier du type « puller », c'est-à-dire que la soufflante 50 est disposée en amont de la veine de circulation interne 22 et entraîne également le flux d'air dans cette dernière. En variante (non représentée), la turbomachine est du type « pusher », c'est-à-dire que la soufflante 50 est placée autour de la moitié aval de la nacelle 20.

Les aubes 56 du rotor de soufflante 54 sont à calage variable, c'est-à-dire que chaque aube 56 est montée pivotante relativement au moyeu 55 autour d'un axe de pivotement P propre. Cet axe de pivotement P s'étend suivant la direction d'élongation de l'aube 56. Il est sensiblement orthogonal à l'axe longitudinal X.

Chaque aube 56 est en particulier apte à pivoter autour de l'axe P relativement au moyeu 55 entre une position dite drapeau, dans laquelle la corde C de l'aube 56 est sensiblement parallèle à l'axe longitudinal X, et une position dite voile, dans laquelle la corde C de l'aube 56 est sensiblement orthogonale à l'axe longitudinal X. De préférence, chaque aube 56 est également apte à pivoter au-delà de la position voile, jusqu'à une position dite reverse, dans laquelle la corde C de l'aube 56 forme un angle strictement supérieure à 90°, par exemple sensiblement égal à 95°, avec l'axe longitudinal X. Les aubes 56 étant le plus souvent vrillées, la corde C prise comme référence pour la mesure de l'angle de calage est, par convention, constituée par la corde de l'aube à 75% du rayon du rotor de soufflante 54.

A cet effet, chaque aube 56 est solidaire, comme visible sur les Figures 3 et 9, d'une pièce d'attache 60 disposée en pied d'aube. Cette pièce d'attache 60 est montée rotative par rapport au moyeu 55 autour de l'axe de pivotement P. Plus précisément, la pièce d'attache 60 est montée rotative à l'intérieur d'un logement 62 ménagé dans le moyeu 55 par l'intermédiaire de billes 64 ou d'autres éléments roulants.

La soufflante 50 comprend en outre un mécanisme de changement de pas 70 pour ajuster l'angle de calage de chaque aube 56 autour de son axe de pivotement P de sorte à adapter les performances de la turbomachine 12 aux différentes phases de vol.

En référence aux Figures 3 à 5, un premier exemple de réalisation de ce mécanisme de changement de pas 70 va maintenant être décrit.

Comme visible sur la Figure 3, le mécanisme de changement de pas 70 comprend un bâti 72, un vérin de commande 74, un système 76 de pilotage du vérin 74 et un système de liaison 78.

Le bâti 72 est solidaire du moyeu 55 et est typiquement constitué par une partie du moyeu 55. Il est ainsi fixe relativement aux axes de pivotement P.

Le bâti 72 comprend un socle 80. Ce socle 80 est centré sur l'axe longitudinal X. Ici, il est traversé par les axes de pivotement P.

Dans l'exemple représenté, le socle 80 délimite un logement 82 ouvert vers l'aval. Ce logement 82 est en particulier cylindrique, typiquement cylindrique de révolution, et centré sur l'axe X. Un palier de transfert d'huile 84 est reçu dans ledit logement 82.

Dans l'exemple représenté, le bâti 72 comprend également un cylindre 86 faisant saillie vers l'amont depuis le socle 80. Ce cylindre 86 est centré sur l'axe X. Il est typiquement cylindrique de révolution.

Le socle 80 et le cylindre périphérique 86 délimitent ensemble une surface périphérique externe 88 du bâti 72. Cette surface périphérique externe 88 est sensiblement cylindrique et centrée sur l'axe X. Elle est orientée radialement vers l'extérieur.

Le vérin de commande 74 comporte une partie fixe 100, solidaire du bâti 72, et une partie mobile 102 mobile en translation suivant l'axe longitudinal X relativement à la partie fixe 100 entre une position rétractée, représentée sur la Figure 3, et une position déployée (non représentée). Optionnellement, la partie mobile 102 est également mobile en rotation autour de l'axe longitudinal X sur un angle restreint, par exemple de l'ordre de 5°.

Le vérin de commande 74 comprend en particulier un cylindre 104, continu, formant l'un de la partie fixe 100 et de la partie mobile 102 et un piston 106 formant l'autre de la partie fixe 100 et de la partie mobile 102. Ici, le cylindre 104 forme la partie mobile 102 et le piston 106 forme la partie fixe 100. En variante (non représentée), c'est l'inverse : le cylindre 104 forme la partie fixe 100 et le piston 106 forme la partie mobile 102.

Ainsi, dans l'exemple représenté, le cylindre 104 s'étend autour de la surface périphérique externe 88 du bâti 72, coaxialement à cette dernière, et le piston 106 est constitué par une collerette 108 solidaire du bâti 72 s'étendant radialement vers l'extérieur depuis la surface périphérique externe 88 jusqu'au cylindre 104.

Le piston 106 présente une face externe 109 en contact avec le cylindre 104.

Le cylindre 104 délimite une cavité interne 110. Le piston 106 divise ladite cavité interne 110 en deux chambres fluidiques 112, 114 contigües. Chacune contient un fluide de commande, typiquement constitué par une huile, pour commander le déplacement de la partie mobile 102 relativement à la partie fixe 100. Ce fluide de commande est à une première pression dans la première chambre fluidique 112 et à une deuxième pression dans la deuxième chambre fluidique 114. Les première et deuxième chambres fluidiques 112, 114 sont agencées de sorte que l'augmentation relative de la première pression (c'est-à-dire relativement à la deuxième pression) entraîne le déplacement du piston 110 vers sa position déployée, l'augmentation relative de la deuxième pression (c'est-à-dire relativement à la première pression) entraînant le déplacement du piston 110 vers sa position rétractée.

Ici, chacune des chambres fluidiques 112, 114 est délimitée intérieurement par la surface périphérique externe 88 du bâti 72 et extérieurement par le cylindre 104. La première chambre fluidique 112 est par ailleurs délimitée à son extrémité aval par le piston 106 et la deuxième chambre fluidique 114 est délimitée à son extrémité amont par le piston 106.

Le vérin de commande 74 est ainsi particulièrement compact, ce qui permet de l'alléger.

Dans l'exemple représenté, la partie mobile 102 comprend également une bague de guidage amont 116 et une bague de guidage aval 118 chacune solidaire du cylindre 104 et s'étendant radialement vers l'intérieur depuis le cylindre 104 jusqu'à la face périphérique externe 88 du bâti 72. La bague de guidage amont 116 est disposée en amont du piston 106 et délimite une extrémité amont de la première chambre fluidique 112. La bague de guidage aval 118 est disposée en aval du piston 106 et délimite une extrémité aval de la deuxième chambre fluidique 114.

Dans l'exemple représenté, chacune des bagues de guidage amont et aval 116, 118 constitue une bague d'étanchéité et ferme longitudinalement la première chambre fluidique 112, respectivement la deuxième chambre fluidique 114. Les chambres fluidiques 112, 114 sont ainsi fermées à chacune des extrémités longitudinales du vérin de commande 74

En variante (non représentée), seule la bague de guidage aval 118 constitue une bague d'étanchéité. La bague de guidage amont 116 présente, elle, des perçages permettant au fluide de commande de s'écouler à travers la bague de guidage amont 116.

En variante encore (non représentée), la partie mobile 102 ne comprend pas de bague de guidage amont 116.

Le système de pilotage 76 comprend un générateur de pression 130 pour porter le fluide de commande à une troisième pression supérieure aux première et deuxième pressions, une unité de contrôle de pression 132 pour ajuster la pression du fluide de commande dans les première et deuxième chambres fluidiques 112, 114 au moyen de la troisième pression, et une ligne de retour 136 pour évacuer le fluide de commande dépressurisé. Le système de pilotage 76 comprend également un réservoir principal 133, un circuit de secours 134 et un module de commande 135.

Le générateur de pression 130 comprend par exemple une pompe apte à pomper le fluide pour le porter à la troisième pression, par exemple 100 bars. Une soupape de surpression principale 139A permet d'évacuer une partie du fluide de commande vers la ligne de retour 136 lorsque la pression du fluide de commande en aval du générateur de pression 130 excède la troisième pression.

L'unité de contrôle de pression 132 est alimentée en fluide de commande à la troisième pression par le générateur de pression 130. Elle est raccordée fluidiquement à la première chambre fluidique 112 et à la deuxième chambre fluidique 114 via le palier de transfert d'huile 84. Elle est apte à répartir le fluide de commande entre la première chambre fluidique 112 et la deuxième chambre fluidique 114 de manière à ajuster la pression de fluide à l'intérieur de chacune de ces chambres 112, 114 et, ainsi, ajuster la position du piston 110 entre ses positions rétractée et déployée. Elle est également apte à évacuer du fluide de commande provenant des première et deuxième chambres fluidiques 112, 114 dans la ligne de retour 136.

Le réservoir principal 133 est configuré pour collecter du fluide de commande dépressurisé provenant de la ligne de retour 136. Il alimente le générateur de pression 130.

Le circuit de secours 134 est apte à alimenter la première chambre fluidique 112 en fluide de commande de manière à déplacer le piston 110 vers sa position déployée en cas de défaillance du générateur de pression 130. A cet effet, le circuit de secours 134 comprend un réservoir auxiliaire 137 et une pompe auxiliaire 138. Dans l'exemple représenté il comprend également une soupape de surpression auxiliaire 139B.

Le réservoir auxiliaire 137 est configuré pour collecter du fluide de commande dépressurisé provenant de la ligne de retour 136. Il alimente la pompe auxiliaire 138. Dans l'exemple représenté, il alimente également le réservoir principal 133, le fluide de commande dépressurisé provenant de la ligne de retour 136 transitant par le réservoir auxiliaire 137 avant d'atteindre le réservoir principal 133.

La pompe auxiliaire 138 est apte à pomper le fluide de commande dans le réservoir auxiliaire 137 pour le porter à la troisième pression. Elle est raccordée fluidiquement à l'unité de contrôle de pression 132 de manière à l'alimenter en fluide de commande à la troisième pression, l'unité de contrôle de pression 132 étant configurée pour rediriger l'intégralité du fluide de commande provenant de la pompe auxiliaire 138 vers la première chambre fluidique 112.

La soupape de surpression 139B est apte à évacuer une partie du fluide de commande vers la ligne de retour 136 lorsque la pression du fluide de commande en aval de la pompe auxiliaire 138 excède la troisième pression.

Le module de commande 135 est configuré pour recevoir une instruction de calage (non représentée) et en déduire un signal de commande transmis à l'unité de contrôle de pression 132. En particulier, le module de commande 135 est configuré pour transmettre à l'unité de contrôle de pression 132 un signal de commande destiné à augmenter la pression de fluide dans la première chambre 112 lorsque l'instruction de calage vise à faire augmenter le pas des aubes 56, et pour transmettre à l'unité de contrôle de pression 132 un signal de commande destiné à augmenter la pression de fluide dans la deuxième chambre 114 lorsque l'instruction de calage vise à faire réduire le pas des aubes 56. La première chambre 112 constitue ainsi une chambre des grands pas, adaptée pour qu'une augmentation relative de pression dans ladite chambre 112 entraîne une rotation des aubes 56 vers les grands pas, et la chambre 114 constitue une chambre des petits pas adaptée pour qu'une augmentation relative de pression dans ladite chambre 114 entraîne une rotation des aubes 56 vers les petits pas.

Le module de commande 135 est également configuré pour transmettre au circuit de secours 134, plus particulièrement à sa pompe auxiliaire 138, une instruction de démarrage en cas de défaillance du générateur de pression 130.

Le système de liaison 78 relie la partie mobile 102 à chaque aube 56 de sorte à convertir la translation de la partie mobile 102 suivant l'axe longitudinal X et, le cas échéant, la rotation de la partie mobile 102 autour de l'axe longitudinal X en une rotation de chaque aube 56 autour de son axe de pivotement P. En particulier, le système de liaison 78 relie la partie mobile 102 à chaque aube 56 de sorte à convertir :
- la translation de la partie mobile 102 suivant l'axe longitudinal X dans un premier sens en une rotation de l'aube à calage variable 56 autour de l'axe de pivotement P vers la position voile, et
- la translation de la partie mobile 102 suivant l'axe longitudinal X dans un deuxième sens opposé au premier sens en une rotation de l'aube à calage variable 56 autour de l'axe de pivotement P vers la position drapeau.

A cet effet, le système de liaison 78 comprend une couronne de synchronisation 140 solidaire de la partie mobile 102 et, pour chacune des aubes 56, un mécanisme 142 de liaison de l'aube 56 à la couronne de synchronisation 140.

La couronne de synchronisation 140 s'étend dans un plan radial autour de la partie mobile 102. Elle est, dans le premier mode de réalisation décrit ici, fixée à une portion médiane de la partie mobile 102.

Chaque mécanisme de liaison 142 comprend une première articulation 144 solidaire de la partie mobile 102, une deuxième articulation 146 solidaire de l'aube 56, à l'écart de l'axe de pivotement P de ladite aube 56, et un organe de liaison 148 reliant la première articulation 144 à la deuxième articulation 146.

La première articulation 144 est portée par la couronne de synchronisation 140. Elle est ici constituée par une liaison rotule.

La deuxième articulation 146 est également constituée par une liaison rotule. Elle est excentrée relativement à l'axe de pivotement P.

L'organe de liaison 148 présente une première extrémité 150 articulée à la première articulation 144 et une deuxième extrémité 152 articulée à la deuxième articulation 146. Avantageusement l'organe de liaison 148 est rigide et de longueur réglable, c'est-à-dire que la distance entre les première et deuxième extrémités 150, 152 peut être modifiée, ce qui permet d'en régler précisément la longueur à l'arrêt de sorte à permettre le pilotage de l'angle de calage de chaque aube 56 par le mécanisme de changement de pas 70.

L'organe de liaison 148 est ici constitué par une bielle 153.

Dans l'exemple représenté chaque mécanisme de liaison 142 comprend également une manivelle 154 reliant la pièce d'attache 60 à la deuxième articulation 146. Cette manivelle 154 est rigide et solidaire de la pièce d'attache 60. Elle s'étend au moins pour partie suivant une direction orthogonale à l'axe de pivotement P. Elle forme un bras de mise en rotation de l'aube 56.

Dans l'exemple représenté, le premier sens va de l'amont vers l'aval, c'est-à-dire que le déplacement de l'organe mobile 102 vers sa position rétractée entraîne une rotation de chaque aube 56 vers sa position voile, et le deuxième sens va de l'aval vers l'amont, c'est-à-dire que le déplacement de l'organe mobile 102 vers sa position déployée entraîne une rotation de chaque aube 56 vers sa position drapeau. De plus, la première articulation 144 est disposée à l'amont de la deuxième articulation 146.

A cet effet, la deuxième articulation 146 est, comme visible sur la Figure 6, placée à l'opposé du bord de fuite 57B relativement à un plan Q orthogonal à la corde C et contenant l'axe de pivotement P.

En variante (non représentée), le premier sens va de l'aval vers l'amont, la première articulation 144 étant disposée à l'aval de la deuxième articulation 146. La deuxième articulation 146 est alors placée du même côté du bord de fuite 57B relativement au plan Q orthogonal à la corde C et contenant l'axe de pivotement P.

Ces agencements particuliers permettent, lorsque le mécanisme de changement de pas 70 est immobilisé, que les sollicitations naturelles de l'aube 56 vers sa position voile fassent travailler l'organe de liaison 148 en traction et non en compression. Le risque de flambage de l'organe de liaison 148 est donc très faible, de sorte qu'il est possible d'utiliser un organe de liaison 148 relativement peu résistant et ainsi d'alléger le mécanisme de changement de pas 70.

Le mécanisme de changement de pas 70 comprend encore un dispositif de verrouillage de pas 160 propre à bloquer la translation de la partie mobile 102 du vérin de commande 74 au moins dans le sens entraînant la rotation des aubes 56 vers les petits pas. Dans le premier mode de réalisation décrit ici, ledit dispositif de verrouillage 160 est logé à l'intérieur du vérin de commande 74.

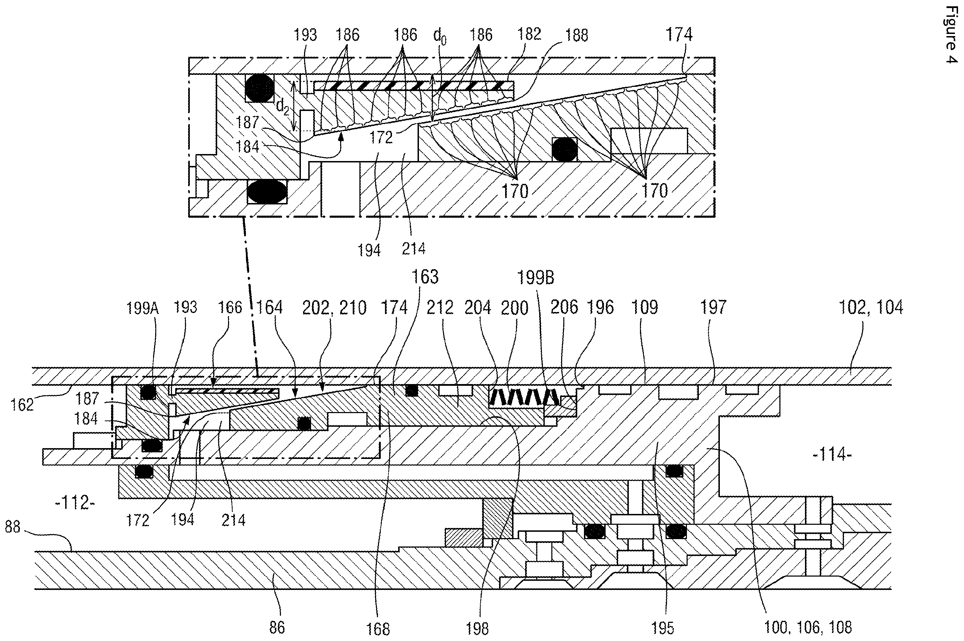

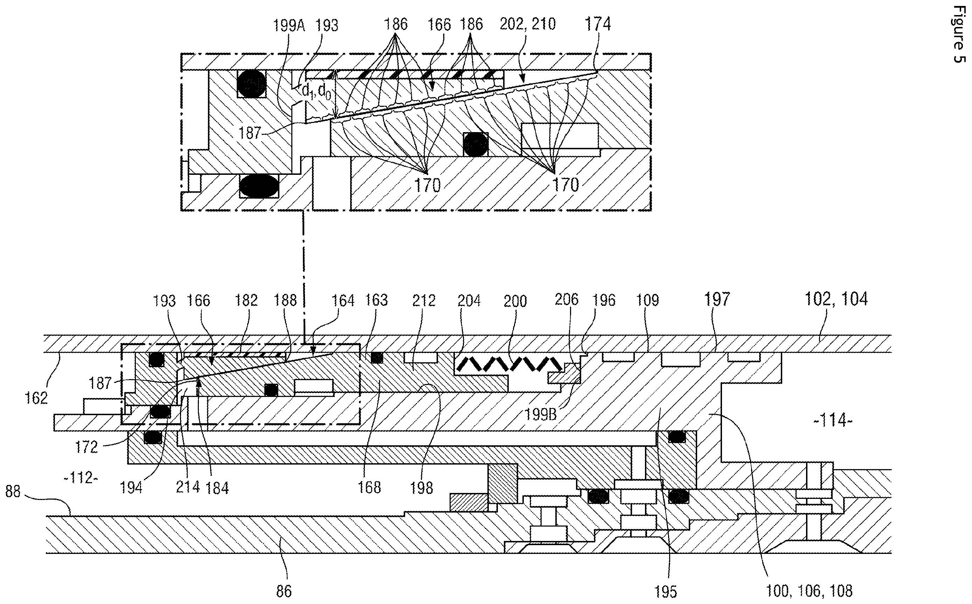

Un exemple de réalisation de ce dispositif de verrouillage 160 va maintenant être décrit, en référence aux Figures 4 et 5.

Le dispositif de verrouillage 160 comprend une surface de blocage 162 mobile conjointement avec la partie mobile 102 relativement à la partie fixe 100, une pièce de guidage 163 délimitant une surface de guidage 164 faisant face à la surface de blocage 162 et un organe de blocage 166 interposé entre la surface de blocage 162 et la surface de guidage 164 pour immobiliser la partie mobile 102 relativement à la partie fixe 100 en venant en prise avec la surface de blocage 162.

La surface de blocage 162 est particulier solidaire de la partie mobile 102.

La surface de blocage 162 mobile en translation relativement au bâti 72 suivant une direction de translation primaire. Cette direction de translation primaire est sensiblement parallèle à la surface de blocage 162. Avantageusement, ladite direction de translation primaire est constituée par une direction de plus grande dimension de la surface de blocage 162.

La surface de blocage 162 est avantageusement cylindrique, c'est-à-dire qu'elle a une forme de cylindre. La direction de translation primaire est alors, de préférence, parallèle à l'axe dudit cylindre. Par ailleurs, l'axe dudit cylindre est avantageusement sensiblement confondu l'axe X, c'est-à-dire que la surface de blocage est sensiblement coaxiale à l'axe X.

La surface de blocage 162 est en particulier portée directement par la partie mobile 102. Dans le premier mode de réalisation décrit ici, elle constitue une surface interne du cylindre 104.

Typiquement, la surface de blocage 162 est sensiblement lisse.

La surface de guidage 164 est positionnée relativement à la surface de blocage 162 de sorte que l'un de la surface de guidage 164 et de la surface de blocage 162 soit interposé entre l'axe X et l'autre de la surface de guidage 164 et de la surface de blocage 162. Ainsi, dans le premier mode de réalisation décrit ici, la surface de guidage 164 est interposée entre l'axe X et la surface de blocage 162 ; la surface de blocage 162 est alors orientée radialement vers l'intérieur, la surface de guidage 164 étant orientée radialement vers l'extérieur.

Ici, la surface de guidage 164 est annulaire et sensiblement coaxiale à la surface de blocage 162. Elle est donc positionnée relativement à la surface de blocage 162 de sorte que l'un de la surface de guidage 164 et de la surface de blocage 162 entoure l'autre de la surface de guidage 164 et de la surface de blocage 162. En particulier, dans le premier mode de réalisation décrit ici, la surface de blocage 162 entoure la surface de guidage 164.

La surface de guidage 164 est mobile en translation relativement à la surface de blocage 162 parallèlement à la surface de blocage 162. Elle est en particulier mobile en translation relativement à la surface de blocage 162 suivant la direction de translation primaire. A cet effet, la pièce de guidage 163 est, dans l'exemple de mise en œuvre décrit ici, mobile relativement au bâti 72 indépendamment de la surface de blocage 162.

La surface de guidage 164 est à une distance sensiblement fixe de la surface de blocage 162, c'est-à-dire qu'elle ne peut ni s'éloigner ni se rapprocher de la surface de blocage 162. En d'autres termes, la surface de guidage 164 est sensiblement fixe en translation relativement à la surface de blocage 162 suivant une direction normale à la surface de blocage 162.

La surface de guidage 164 est également mobile en translation relativement à l'organe de blocage 166 suivant une direction de translation secondaire entre une première configuration, représentée sur la Figure 4, et une deuxième configuration, représentée sur la Figure 5. A cet effet, l'un de la pièce de guidage 163 et de l'organe de blocage 166 est constitué par une pièce mobile 168 mobile en translation relativement au bâti 72 suivant ladite direction de translation secondaire, l'autre de la pièce de guidage 163 et de l'organe de blocage 166 étant sensiblement fixe relativement au bâti 72 suivant ladite direction de translation secondaire. Dans l'exemple de mise en œuvre décrit ici, c'est la pièce de guidage 163 qui est constituée par ladite pièce mobile 168.

La direction de translation secondaire est parallèle à la surface de blocage 162. Elle est en particulier parallèle à la direction de translation primaire. La direction de translation secondaire est donc ici sensiblement parallèle à l'axe X.

La surface de guidage 164 est composée d'une multitude de portions de surface 170 juxtaposées les unes aux autres suivant la direction de translation secondaire. Chaque portion de surface 170 est typiquement constituée par une portion élémentaire de la surface de guidage 164 qui s'étend sur toute la largeur de la surface de guidage 164 perpendiculairement à la direction de translation secondaire et qui est de très petite dimension parallèlement à ladite direction de translation secondaire. Dans un cas extrême, chaque portion de surface 170 est constituée par une ligne parcourant la surface de guidage 164 perpendiculairement à la direction de translation secondaire.

Chaque portion de surface 170 est à une distance d₀, fixe, de la surface de blocage 162.

Dans l'exemple représenté, la surface de guidage 164 converge vers la surface de blocage 162 parallèlement à la direction de translation secondaire. En d'autres termes, la distance de la surface de guidage 164 à la surface de blocage 162 va décroissante depuis une première extrémité 172 de la surface de guidage 164 jusqu'à une deuxième extrémité 174 opposée, parallèlement à la direction de translation secondaire. Ainsi, pour chaque paire de portions de surface 170 juxtaposées, celle desdites portions de surface 170 qui est la plus proche de la deuxième extrémité 174 est à une distance d₀ de la surface de blocage 162 qui est inférieure ou égale à la distance d₀ de l'autre portion de surface 170 à la surface de blocage 162.

La surface de guidage 164 converge vers la surface de blocage 162 suivant une première direction de convergence. De préférence, ladite première direction de convergence est, comme représenté, orientée de la chambre des grands pas 112 vers la chambre des petits pas 114.

Ici, la surface de guidage 164 converge continûment vers la surface de blocage 162, c'est-à-dire que la distance de la surface de guidage 164 à la surface de blocage 162 décroît continûment depuis la première extrémité 172 jusqu'à la deuxième extrémité 174. Avantageusement, la pente de la surface de guidage 164 est sensiblement constante entre la première extrémité 172 et la deuxième extrémité 174.

Typiquement, la surface de guidage 164 est sensiblement lisse.

L'organe de blocage 166 est positionné relativement à la surface de blocage 162 de sorte que l'un de l'organe de blocage 166 et de la surface de blocage 162 soit interposé entre l'axe X et l'autre de l'organe de blocage 166 et de la surface de blocage 162. Ainsi, dans le premier mode de réalisation décrit ici, l'organe de blocage 166 est interposé entre l'axe X et la surface de blocage 162.

De préférence, l'organe de blocage 166 est, comme représenté, annulaire et sensiblement coaxial à la surface de blocage 162. Il est donc positionné relativement à la surface de blocage 162 de sorte que l'un de l'organe de blocage 166 et de la surface de blocage 162 entoure l'autre de l'organe de blocage 166 et de la surface de blocage 162. En particulier, dans le premier mode de réalisation décrit ici, la surface de blocage 162 entoure l'organe de blocage 166.

L'organe de blocage 166 est également sensiblement coaxial à la surface de guidage 164.

L'organe de blocage 166 est mobile en translation relativement à la surface de blocage 162 parallèlement à la surface de blocage 162. Il est en particulier mobile en translation relativement à la surface de blocage 162 parallèlement à la direction de translation primaire.

L'organe de blocage 166 est également mobile relativement à la surface de blocage 162 suivant une direction perpendiculaire à ladite surface 162 entre une configuration de déverrouillage à l'écart de la surface de blocage 162, représentée sur la Figure 4, et une configuration de verrouillage en prise avec la surface de blocage 162 de sorte que la partie mobile 102 soit immobilisée relativement au bâti 72, représentée sur la Figure 5.

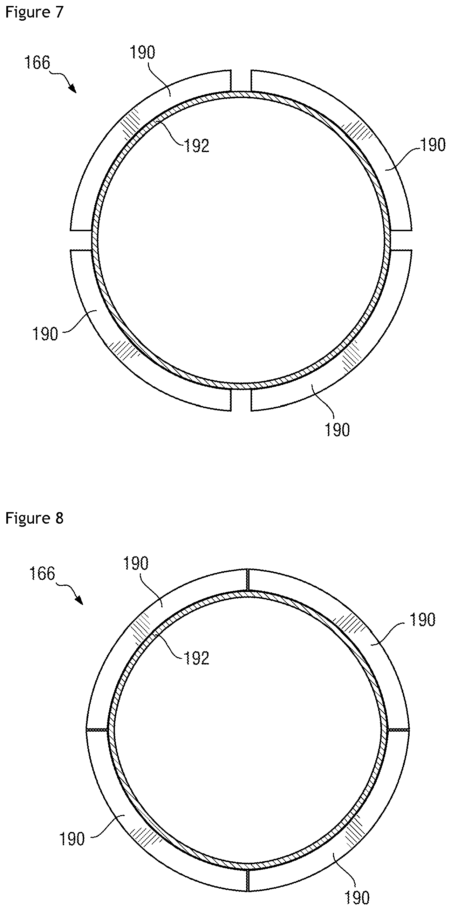

A cet effet, l'organe de blocage 166 est ici circonférentiellement divisé en plusieurs segments 190 mobiles les uns par rapport aux autres entre une configuration rapprochée, représentée sur la Figure 7, dans laquelle l'organe de blocage 166 a un diamètre réduit, et une configuration écartée, représentée sur la Figure 8, dans laquelle l'organe de blocage 166 a un diamètre augmenté. Ces segments 190 sont au moins au nombre de deux. De préférence, leur nombre est supérieur ou égal à quatre. Dans l'exemple représenté, les segments 190 sont au nombre de quatre.

Le diamètre de l'organe de blocage 166 peut ainsi varier entre une première valeur dans laquelle l'organe de blocage 166 est à l'écart de la surface de blocage 162, l'organe de blocage 166 étant alors en configuration de déverrouillage, et une deuxième valeur, dans laquelle l'organe de blocage 166 est en prise avec la surface de blocage 162, l'organe de blocage 166 étant alors en configuration de verrouillage. Ainsi, l'une des configurations rapprochée et écartée constitue la configuration de déverrouillage de l'organe de blocage 166 et l'autre des configurations rapprochée et écartée constitue la configuration de verrouillage.

En particulier, dans le premier mode de réalisation décrit ici, la configuration rapprochée constitue la configuration de déverrouillage, la configuration écartée constituant la configuration de déverrouillage.

Chaque segment 190 est rigide. Il est typiquement en métal.

L'organe de blocage 166 comprend en outre, avantageusement, un élément de rappel 192 sollicitant les segments 190 vers celle des configurations écartée et rapprochée constituant la configuration de déverrouillage. Cet élément de rappel 192 est ici formé par un anneau élastique, par exemple un joint torique, délimitant l'intérieur de l'organe de blocage 166 et à l'extérieur duquel sont rapportés les segments 190. Ainsi, la configuration de déverrouillage constitue la configuration de l'organe de blocage 166 lorsqu'il est au repos.

En variante (non représentée), l'organe de blocage 166 est constitué d'une douille fendue. Une douille fendue est, de manière connue, une pièce annulaire interrompue par une fente. Les lèvres de la douille bordant sont mobiles l'une relativement à l'autre entre une configuration rapprochée, dans laquelle le diamètre de la douille est réduit, et une configuration écartée, dans laquelle le diamètre de la douille est augmenté. Ainsi, l'une des configurations rapprochée et écartée constitue la configuration de déverrouillage de l'organe de blocage 166 et l'autre des configurations rapprochée et écartée constitue la configuration de verrouillage.

De retour aux Figures 4 et 5, l'organe de blocage 166 présente une face de blocage 182 faisant face à la surface de blocage 162 et une face de guidage 184 faisant face à la surface de guidage 164.

La face de blocage 182 est sensiblement parallèle à la surface de blocage 162 dans au moins une des configurations de verrouillage et déverrouillage de l'organe de blocage 166. Dans l'exemple de mise en œuvre décrit ici, la face de blocage 182 est sensiblement parallèle à la surface de blocage 162 à la fois dans la configuration de verrouillage et dans la configuration de déverrouillage de l'organe de blocage 166.

La face de guidage 184 est composée d'une multitude de portions de face 186 juxtaposées les unes aux autres suivant la direction de translation secondaire. Chaque portion de face 186 est typiquement constituée par une portion élémentaire de la face de guidage 184 qui s'étend sur toute la largeur de la face de guidage 184 perpendiculairement à la direction de translation secondaire et qui est de très petite dimension parallèlement à ladite direction de translation secondaire. Dans un cas extrême, chaque portion de face 186 est constituée par une ligne parcourant la face de guidage 184 perpendiculairement à la direction de translation secondaire.

Dans l'exemple représenté, la face de guidage 184 converge vers la face de blocage 182 parallèlement à la direction de translation secondaire. En d'autres termes, la distance de la face de guidage 184 à la face de blocage 182 va décroissante depuis une première extrémité 187 de la face de guidage 184 jusqu'à une deuxième extrémité 188 opposée, parallèlement à la direction de translation secondaire. Ainsi, pour chaque paire de portions de face 186 juxtaposées, celle desdites portions de face 186 qui est la plus proche de la deuxième extrémité 188 est à une distance de la face de blocage 182 qui est inférieure ou égale à la distance de l'autre portion de face 186 à la face de blocage 182.

La face de guidage 184 converge vers la face de blocage 182 suivant une deuxième direction de convergence. De préférence, ladite deuxième direction de convergence a, comme représenté, la même orientation que la première direction de convergence. Ici, la deuxième direction de convergence est ainsi orientée de la chambre des grands pas 112 vers la chambre des petits pas 114.

Ici, la face de guidage 184 converge continûment vers la face de blocage 182, c'est-à-dire que la distance de la face de guidage 184 à la face de blocage 182 décroît continûment depuis la première extrémité 187 jusqu'à la deuxième extrémité 188. Avantageusement, la pente de la face de guidage 184 est sensiblement constante entre la première extrémité 187 et la deuxième extrémité 188.

De préférence, la face de guidage 184 est sensiblement parallèle à la surface de guidage 164 dans au moins une des configurations de verrouillage et déverrouillage de l'organe de blocage 166. Dans l'exemple de mise en œuvre décrit ici, la face de guidage 184 est sensiblement parallèle à la surface de guidage 164 à la fois dans la configuration de verrouillage et dans la configuration de déverrouillage de l'organe de blocage 166.

Chaque portion de face 186 est à une première distance d₁ (Figure 5) de la surface de blocage 162 lorsque l'organe de blocage 166 est en configuration de verrouillage et à une deuxième distance d₂ (Figure 4) de la surface de blocage 162 lorsque l'organe de blocage 166 est en configuration de déverrouillage. Pour au moins une partie des portions de face 186, avantageusement pour chaque portion de face 186, la première distance d₁ est inférieure à la deuxième distance d₂. Parmi lesdites portions de face 186, il existe au moins une portion de face 186 pour laquelle la première distance d₁ est égale à la distance d₀ entre la surface de blocage 162 et une portion de surface 170 dite correspondante.

Dans l'exemple de mise en œuvre décrit ici, la première distance d₁ de chaque portion de face 186 est inférieure à la deuxième distance d₂ de ladite portion de face 186. A cet effet, chaque segment 190 est mobile en translation perpendiculairement à la surface de blocage 162 entre les configurations de verrouillage et de déverrouillage de l'organe de blocage 166. Chaque segment 190 est en particulier relié au bâti 72 par une liaison 193 autorisant ce degré de liberté.

Par ailleurs, dans l'exemple de mise en œuvre décrit ici, il existe pour plusieurs portions de face 186 une portion de surface 170 correspondante qui est à une distance d₀ de la surface de blocage 162 égale à la première distance d₁ de la portion de face 186 à la surface de blocage 162 lorsque l'organe de blocage 166 est en configuration de verrouillage.

Lorsque la surface de guidage 164 et l'organe de blocage 166 sont dans leur première configuration (Figure 4), chaque portion de face 186 est à l'écart de la portion de surface 170 correspondante ; l'organe de blocage 166 est donc libre d'être dans sa configuration de déverrouillage.

Lorsque la surface de guidage 164 et l'organe de blocage 166 sont dans leur deuxième configuration (Figure 5), au moins une portion de face 186 est en appui contre la portion de surface 170 correspondante et intercalée entre ladite portion de surface correspondante 170 et la surface de blocage 162 ; l'organe de blocage 166 est alors contraint d'être dans sa configuration de verrouillage. Ici, ce sont plusieurs portions de face 186 qui sont en appui contre les portions de surface 170 correspondantes et intercalées entre lesdites portions de surface correspondantes 170 et la surface de blocage 162 lorsque la surface de guidage 164 et l'organe de blocage 166 sont dans leur deuxième configuration. Avantageusement, la face de guidage 184 est ainsi en appui contre la surface de guidage 164 sur au moins 50% de sa longueur axiale lorsque la surface de guidage 164 et l'organe de blocage 166 sont dans leur deuxième configuration.

Le déplacement de l'organe de blocage 166 relativement à la surface de guidage 164 de la première configuration vers la deuxième configuration est orienté dans la même direction que les première deuxième directions de convergence, c'est-à-dire ici dans un mouvement allant de la chambre des grands pas 112 vers la chambre des petits pas 114. Ainsi, le contact entre la surface de guidage 164 et la face de guidage 184 se fait de manière progressive, ce qui facilite le déplacement de l'organe de blocage 166 relativement à la surface de guidage 164.

Toujours en référence aux Figures 4 et 5, la pièce mobile 168 est logée dans un évidement 194, ici un évidement annulaire centré sur l'axe X, ménagée dans un support 195 solidaire du bâti 72. Cet évidement 194 débouche à travers une ouverture 196 dans une face 197 dudit support 195 qui fait face à la surface de blocage 162. Il est délimité, à l'opposé de la surface de blocage 162, par un fond 198 en retrait par rapport à ladite face 197. Il est également délimité, suivant la direction de translation secondaire, par deux parois d'extrémité opposées 199A, 199B.

Le fond 198 est en particulier cylindrique et coaxial à l'axe longitudinal X. Les parois 199A, 199B sont, elles, sensiblement radiales.

Dans le premier mode de réalisation décrit ici, ledit support 195 est constitué par le piston 106, la face 196 étant constituée par la face externe 109 dudit piston 106.

Par ailleurs, dans l'exemple de mise en œuvre décrit ici, l'ouverture 196 s'étend de l'une à l'autre des parois d'extrémité 199A, 199B. Elle s'étend également, avantageusement, sur toute la circonférence de la face 197.

Toujours dans l'exemple de mise en œuvre décrit ici, une première des parois d'extrémité 199A porte la liaison 193 par laquelle chaque segment 190 est relié au bâti 72

Toujours en référence aux Figures 4 et 5, le dispositif de verrouillage 160 comprend encore un organe de rappel 200 sollicitant la surface de guidage 164 et l'organe de blocage 166 vers la deuxième configuration, et un dispositif de maintien 202 pour maintenir la surface de guidage 164 et l'organe de blocage 166 dans la première configuration sous certaines conditions prédéterminées, typiquement lorsque la troisième pression est supérieure à un seuil, ledit seuil étant inférieur à une pression minimale d'alimentation des chambres fluidiques 112, 114 en conditions normales d'opération. Une telle pression minimale d'alimentation des chambres fluidiques 112, 114 en conditions normales d'opération est la pression minimale fournie par le générateur de pression 130 en l'absence de tout dysfonctionnement, notamment en l'absence de fuite ou de panne.

L'organe de rappel 200 est agencé de sorte à exercer sur la surface de guidage 164 et sur l'organe de blocage 166 des forces opposées, la force exercée sur la surface de guidage 164 sollicitant ladite surface 164 vers l'organe de blocage 166 et la force exercée sur l'organe de blocage 166 sollicitant ledit organe de blocage 166 vers la surface de guidage 164. En particulier, la force exercée sur la surface de guidage 164 est orientée dans une direction opposée aux première et deuxième directions de convergence et la force exercée sur l'organe de blocage 166 est orientée dans la même direction que les première et deuxième directions de convergence.

A cet effet, l'organe de rappel 200 comprend ici au moins un ressort de compression comprimé entre un premier épaulement 204 mobile conjointement avec la pièce mobile 168 suivant la direction de translation secondaire et un deuxième épaulement 206 porté par le bâti 72. Dans l'exemple de mise en œuvre décrit ici, le deuxième épaulement 206 est porté par la deuxième paroi 199B (c'est-à-dire par la paroi délimitant l'évidement 194 à l'opposé de la paroi 199A portant la glissière 193) et le premier épaulement 204 est porté par la pièce mobile 168.

L'organe de rappel 200 comprend par exemple un unique ressort de compression centré sur l'axe X. En variante, il comprend une pluralité de ressorts de compression répartis circonférentiellement autour de l'axe X.

Grâce à l'organe de rappel 200, la configuration de la surface de guidage 164 et l'organe de blocage 166 au repos est la deuxième configuration. Cela permet de forcer l'organe de blocage 166 dans sa configuration de verrouillage même en cas de panne.

Le dispositif de maintien 202 comprend un vérin de contrebalancement 210 comportant un piston de contrebalancement 212 et une chambre de contrebalancement 214.

Le piston de contrebalancement 212 est monté mobile en translation relativement au bâti 72 suivant la direction de translation secondaire, conjointement avec l'organe mobile 168. Dans l'exemple de mise en œuvre décrit ici, il est solidaire et est en particulier constitué par l'organe de mobile 168, ce qui permet de gagner en compacité.

Le piston de contrebalancement 212 est par ailleurs sensiblement coaxial à la surface de guidage 164 et à l'organe de blocage 166.

La chambre de contrebalancement 214 est délimitée, suivant la direction de translation secondaire, entre le piston de contrebalancement 212 et le bâti 72. La chambre de contrebalancement 214 est ainsi en contact avec le piston de contrebalancement 212. En particulier, dans l'exemple de mise en œuvre décrit ici, la chambre de contrebalancement 214 est délimitée, suivant la direction de translation secondaire, entre la première paroi 199A et la surface de guidage 164.

Dans l'exemple de mise en œuvre décrit ici, la chambre de contrebalancement 214 est également délimitée, perpendiculairement à la surface de blocage 162, entre le fond 198 et la surface de blocage 162. A cet effet, la face 197 du support 195 et le piston de contrebalancement 212 forment chacun un contact étanche, en particulier un contact annulaire étanche, avec la surface de blocage 162.

La chambre de contrebalancement 214 est raccordée fluidiquement au générateur de pression 130 par un circuit de connexion fluidique 218 (Figure 3) de sorte à être alimentée en fluide de commande à la troisième pression. Elle est destinée à contrebalancer la sollicitation du dispositif de rappel 200 lorsque cette alimentation est active.

A cet effet, le vérin de contrebalancement 210 est agencé de sorte que la pression exercée sur le piston 212 par le fluide contenu dans la chambre 214 soit orientée dans une direction opposée à celle de la sollicitation du dispositif de rappel 200. Ainsi, ici, le piston de contrebalancement 212 est interposé entre la chambre 214 et le dispositif de rappel 200, l'épaulement 204 étant interposé entre le dispositif de rappel 200 et le piston 212. De plus, le piston de contrebalancement 212 et la chambre de contrebalancement 214 sont dimensionnés de sorte que, lorsque la chambre 214 est alimentée en fluide de commande à une pression supérieure au seuil, la force exercée par le fluide de commande sur le piston 212 soit supérieure à la sollicitation du dispositif de rappel 200.

Ainsi, tant que la pression fournie à la chambre 214 est supérieure au seuil, la sollicitation du dispositif de rappel 200 est annulée, la surface de guidage 164 et l'organe de blocage 166 étant maintenus dans leur première configuration. En revanche, lorsque la chambre 214 n'est plus alimentée en fluide de commande à une pression supérieure au seuil, typiquement lorsque le générateur de pression 130 tombe en panne, la force du dispositif de rappel 200 l'emporte et la surface de guidage 164 et l'organe de blocage 166 sont déplacés dans leur deuxième configuration.

De retour à la Figure 3, l'unité de contrôle de pression 132 est ici interposée fluidiquement entre le générateur de pression 130 et le circuit de connexion fluidique 218. Elle présente une première configuration, dans laquelle elle isole le circuit de connexion fluidique 218 de la ligne de retour 136, et une deuxième configuration, dans laquelle elle raccorde fluidiquement le circuit de connexion fluidique 218 à la ligne de retour 136.

L'unité de contrôle de pression 132 est configurée pour être normalement dans sa première configuration et pour basculer dans sa deuxième configuration sur réception d'une instruction de commande transmise par le module de commande 135.

Un procédé de changement du pas des aubes 56, mis en œuvre par le mécanisme de changement de pas 70, va maintenant être décrit.

Lors d'une première étape de ce procédé, le module de commande 135 reçoit tout d'abord une instruction de calage visant à faire augmenter le pas des aubes 56. Le module de commande 135 transmet alors à l'unité de contrôle de pression 132 un signal de commande destiné à augmenter la pression de fluide dans la première chambre 112. La pression de fluide dans la première chambre 112 augmentant, la partie mobile 102 du vérin 74 se déplace dans le deuxième sens, vers sa position déployée, ce qui, par l'intermédiaire du système de liaison 78, entraîne le pivotement des aubes 56 vers les grands pas (c'est-à-dire vers la position drapeau).

Sous l'effet de la sollicitation de l'élément de rappel 192, l'organe de blocage 166 reste en configuration de déverrouillage à l'écart de la surface de blocage 162 et ne s'oppose donc pas au déplacement de la partie mobile 102.

Une fois la partie mobile 102 arrivée dans une position d'équilibre, elle se stabilise, les aubes 56 conservant une orientation fixe.

Lors d'une deuxième étape du procédé de changement de pas, le module de commande 135 reçoit tout d'abord une instruction de calage visant à faire réduire le pas des aubes 56. Le module de commande 135 transmet alors à l'unité de contrôle de pression 132 un signal de commande destiné à augmenter la pression de fluide dans la deuxième chambre 114. La pression de fluide dans la deuxième chambre 114 augmentant, la partie mobile 102 du vérin 74 se déplace dans le premier sens vers sa position rétractée, ce qui, par l'intermédiaire du système de liaison 78, entraîne le pivotement des aubes 56 vers les petits pas (c'est-à-dire vers la position voile).

Là encore, sous l'effet de la sollicitation de l'élément de rappel 192, l'organe de blocage 166 reste en configuration de déverrouillage à l'écart de la surface de blocage 162 et ne s'oppose donc pas au déplacement de la partie mobile 102.

Une fois la partie mobile 102 arrivée dans une position d'équilibre, elle se stabilise, les aubes 56 conservant une orientation fixe.

Optionnellement, le procédé de changement de pas comprend également, suite à la première ou à la deuxième étape, une étape de verrouillage commandé de l'orientation des aubes 56.

Lors de cette étape, le module de commande 135 transmet à l'unité de contrôle de pression 132 une commande de verrouillage de pas. Sous l'effet de cette commande, l'unité de contrôle de pression 132 raccorde fluidiquement le circuit de connexion fluidique 218 à la ligne de retour 136, entraînant une baisse de la pression de fluide dans la chambre de contrebalancement 214. La pression de fluide dans ladite chambre 214 passe alors sous le seuil et est donc insuffisante pour contrebalancer la sollicitation du dispositif de rappel 200, qui ainsi entraîne le déplacement de la pièce mobile 168 suivant l'axe X.

La surface de guidage 164 vient alors appuyer sur la face de guidage 184 de l'organe de blocage 166. La surface de guidage 164 et la face de guidage 184 étant chacune inclinées relativement à la direction longitudinale (puisque la surface de guidage 164 converge vers la surface de blocage 162 et la face de guidage 184 converge vers la face de blocage 182), la force d'appui de la surface de guidage 164 sur la face de guidage 184 a une composante radiale (ce qui serait également le cas si seule la surface de guidage 164 ou la face de guidage 184 était inclinée relativement à la direction longitudinale). La surface de guidage 164 pousse donc l'organe de blocage 166 vers la surface de blocage 162.

L'organe de blocage 166 se déplace ainsi, sous l'effet de cette poussée, vers la surface de blocage 162 jusqu'à ce que l'organe de blocage 166 soit en prise avec la surface de blocage 162. Là, le déplacement de la pièce mobile 168 suivant l'axe X s'arrête, celui-ci ne pouvant se faire que conjointement au déplacement de l'organe de blocage 166 vers la surface de blocage 162, lequel est alors empêché.

La force du dispositif de rappel 200 sur l'organe mobile 168 est alors convertie en force d'appui de l'organe de blocage 166 sur la surface de blocage 162 par effet de coin. Cela crée une force d'adhérence à l'interface entre l'organe de blocage 166 et la surface de blocage 162 qui bloque tout déplacement de la surface de blocage 162 relativement à l'organe de blocage 166.

La partie mobile 102 ne peut alors plus se déplacer relativement à la partie fixe 100. Les aubes 56 sont ainsi bloquées dans leur orientation même en cas de perte de pression fluidique dans l'une des chambres 112, 114.

En cas de dysfonctionnement du système de pilotage 76, typiquement en cas de panne du générateur de pression 130, le procédé de changement de pas comprend une étape supplémentaire de verrouillage non-commandé de l'orientation des aubes 56.

Lors de cette étape, le dysfonctionnement du système de pilotage 76 entraîne une baisse de la pression de fluide dans la chambre de contrebalancement 214, typiquement parce que le générateur de pression 130 n'est plus en mesure de porter la troisième pression au-delà du seuil. La pression de fluide dans ladite chambre 214 est alors insuffisante pour contrebalancer la sollicitation du dispositif de rappel 200, qui ainsi entraîne le déplacement de la pièce mobile 168 suivant l'axe X.

La surface de guidage 164 vient alors appuyer sur la face de guidage 184 de l'organe de blocage 166. La surface de guidage 164 et la face de guidage 184 étant chacune inclinées relativement à la direction longitudinale (puisque la surface de guidage 164 converge vers la surface de blocage 162 et la face de guidage 184 converge vers la face de blocage 182), la force d'appui de la surface de guidage 164 sur la face de guidage 184 a une composante radiale (ce qui serait également le cas si seule la surface de guidage 164 ou la face de guidage 184 était inclinée relativement à la direction longitudinale). La surface de guidage 164 pousse donc l'organe de blocage 166 vers la surface de blocage 162.

L'organe de blocage 166 se déplace ainsi, sous l'effet de cette poussée, vers la surface de blocage 162 jusqu'à ce que l'organe de blocage 166 soit en prise avec la surface de blocage 162. Là, le déplacement de la pièce mobile 168 suivant l'axe X s'arrête, celui-ci ne pouvant se faire que conjointement au déplacement de l'organe de blocage 166 vers la surface de blocage 162, lequel est alors empêché.

La force du dispositif de rappel 200 sur l'organe mobile 168 est alors convertie en force d'appui de l'organe de blocage 166 sur la surface de blocage 162 par effet de coin. Cela crée une force d'adhérence à l'interface entre l'organe de blocage 166 et la surface de blocage 162 qui bloque tout déplacement de la surface de blocage 162 relativement à l'organe de blocage 166.

La partie mobile 102 ne peut alors plus se déplacer relativement à la partie fixe 100. Les aubes 56 sont ainsi bloquées dans leur orientation.

L'étape de verrouillage non-commandé est de préférence suivie d'une étape de mise en sécurité de la soufflante 50. Lors de cette étape, le circuit de secours 134 est activé et alimente la première chambre fluidique 112 et la chambre de contrebalancement 214 en fluide de commande de manière à augmenter la pression fluidique dans ces chambres. Sous l'effet de l'augmentation de pression dans la chambre 214, la force d'appui de l'organe de blocage 166 sur la surface de blocage 162 disparaît. Il n'y a alors plus d'adhérence entre l'organe de blocage 166 et la surface de blocage 162 (ou du moins cette adhérence devient très faible). La partie mobile 102 n'est donc plus immobilisée et peut se déplacer vers l'aval sous l'effet de l'augmentation de pression dans la première chambre fluidique 112 jusqu'à ce que les aubes 56 se retrouvent en position drapeau.

On notera que ces différentes étapes peuvent être mises en œuvre indépendamment les unes des autres.

Ainsi, grâce à l'exemple de réalisation décrit ci-dessus, il est possible, de manière simple et robuste, de verrouiller l'orientation courante des aubes 56 (avec une certaine tolérance). Ce verrouillage est rendu possible même en l'absence d'énergie d'alimentation du vérin 74 et même avec une force peu importante. Et ce verrouillage est permis sans augmentation significative de l'encombrement du mécanisme 70.

En particulier, le premier mode de réalisation décrit ci-dessus s'avère être avantageux en ce qu'il est particulièrement compact radialement et simplifie la conception du mécanisme 70 en facilitant l'alimentation de la chambre de contrebalancement 214 via le palier de transfert d'huile 84.

Un deuxième mode de réalisation du mécanisme de changement de pas 70 va maintenant être décrit, en référence aux Figures 9 à 15.

Ce deuxième mode de réalisation diffère du premier mode de réalisation en ce que le dispositif de verrouillage 160 est disposé radialement à l'extérieur du vérin de commande 74 et en particulier entoure le vérin de commande 74. Ainsi, dans ce deuxième mode de réalisation :
- la surface de blocage 162 constitue une surface externe du cylindre 104,
- la surface de blocage 162 est interposée entre l'axe X et la surface de guidage 164,
- la surface de blocage 162 est orientée radialement vers l'extérieur, la surface de guidage 164 étant orientée radialement vers l'intérieur,
- la surface de guidage 164 entoure la surface de blocage 162,
- la surface de blocage 162 est interposée entre l'axe X et l'organe de blocage 166,
- l'organe de blocage 166 entoure la surface de blocage 162,
- la configuration écartée de l'organe de blocage 166 constitue sa configuration de déverrouillage, la configuration rapprochée constituant sa configuration de verrouillage,
- le support 185 est disposé radialement à l'extérieur de l'organe de blocage 166 et du vérin de commande 74,
- le support 185 s'étend autour de l'organe de blocage 164, et
- la face 186 constitue une face interne, orientée vers l'axe X, dudit support 185.

Ce deuxième mode de réalisation permet, comparativement au premier mode de réalisation décrit plus haut, d'avoir une chambre de contrebalancement 214 de section radiale plus importante, ce qui permet d'utiliser un organe de rappel 200 exerçant une force plus importante, et ainsi d'augmenter la force de blocage du dispositif de verrouillage 160.

Par ailleurs, dans ce deuxième mode de réalisation, la couronne de synchronisation 140 est fixée à une extrémité amont 143 de la partie mobile 102 plutôt qu'à la portion médiane de la partie mobile 102. Cela est le résultat du gain de compacité longitudinale permis par le deuxième mode de réalisation.

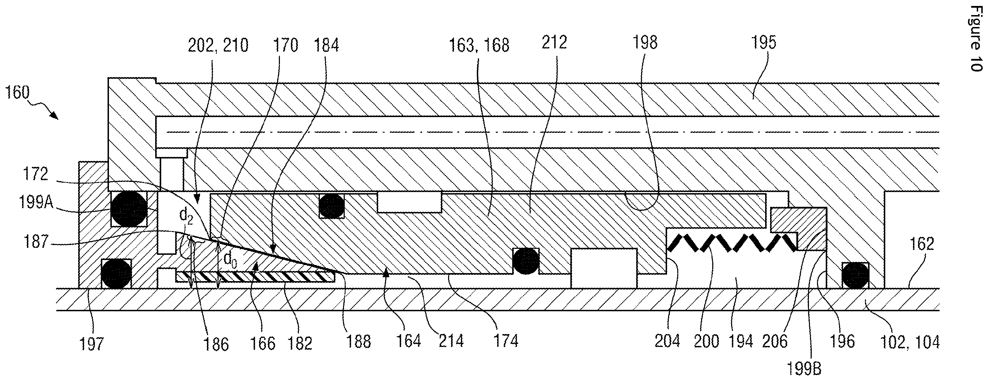

D'autres exemples de mise en œuvre du dispositif de verrouillage 160 vont maintenant être décrits, en référence aux Figures 10 à 15. On notera que, bien que ces autres exemples de mise en œuvre soient décrits en relation avec le deuxième mode de réalisation avec le dispositif de verrouillage 160 disposé radialement à l'extérieur du vérin de commande 74, ils sont également applicables au premier mode de réalisation avec le dispositif de verrouillage 160 disposé à l'intérieur du vérin de commande 74.

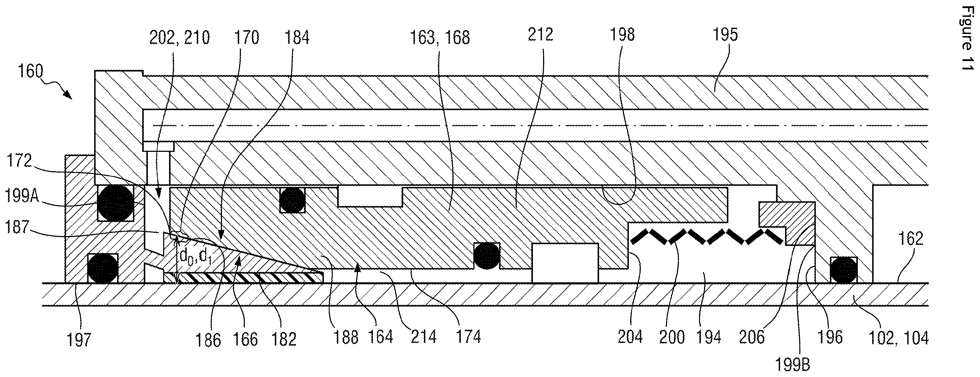

Une première variante de mise en œuvre du dispositif de verrouillage 160 est représentée sur les Figures 10 et 11, la Figure 10 présentant l'organe de blocage 166 et la surface de guidage 164 dans leur première configuration, la Figure 11 présentant l'organe de blocage 166 et la surface de guidage 164 dans leur deuxième configuration. Cette première variante est identique à la première mise en œuvre décrite plus haut.

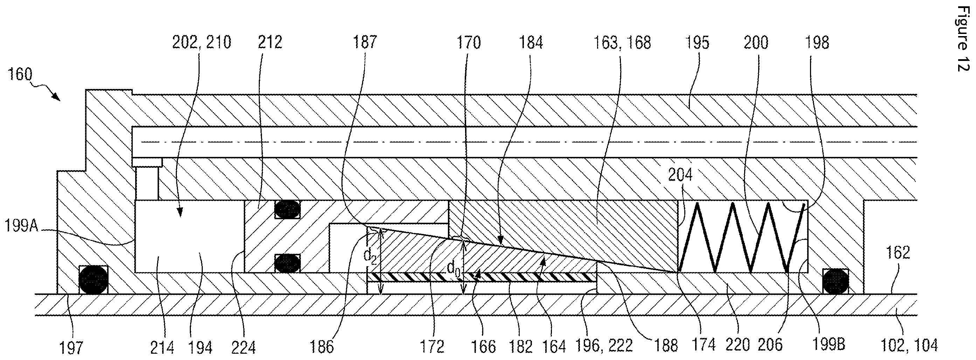

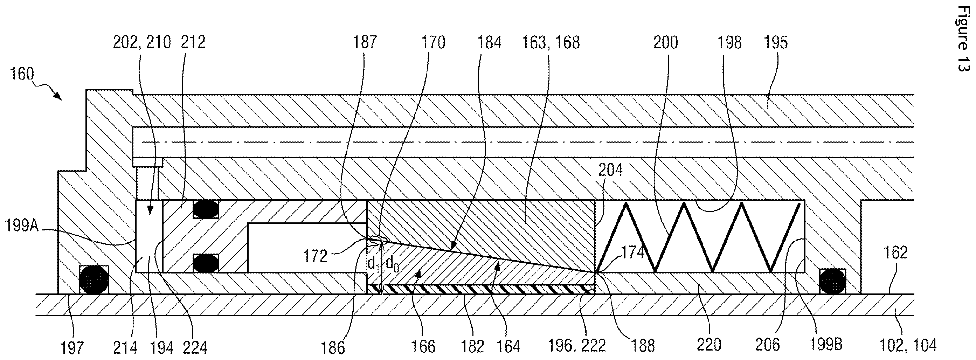

Une deuxième variante de mise en œuvre du dispositif de verrouillage 160 est représentée sur les Figures 12 et 13, la Figure 12 présentant l'organe de blocage 166 et la surface de guidage 164 dans leur première configuration, la Figure 13 présentant l'organe de blocage 166 et la surface de guidage 164 dans leur deuxième configuration. Cette deuxième variante diffère de la première mise en œuvre décrite plus haut par plusieurs caractéristiques.

Tout d'abord, l'ouverture 196 par laquelle l'évidement 194 débouche dans la face 197 du support 195 ne s'étend pas de l'une à l'autre des parois 199A, 199B de l'évidement 194. A la place, l'évidement 194 est en partie fermé par une paroi 220 opposée au fond 195 et interposée entre le fond 195 et la surface de blocage 162. L'ouverture 196 est formée par une rainure 222 ménagée à travers ladite paroi 220. En particulier, la paroi 220 est cylindrique et la rainure 222 est annulaire et sensiblement coaxiale à la paroi 220.

Ensuite, chaque segment 190 de l'organe de blocage 166 n'est pas lié au bâti 72 par une liaison 193 portée par la première paroi 199A de l'évidement 194. A la place, chaque segment 190 a une extension longitudinale légèrement inférieure à l'extension longitudinale de la rainure 222 et est engagé dans ladite rainure 222. La rainure 222 a ainsi fonction de guide pour guider la translation radiale de chaque segment 190 relativement à la surface de blocage 162 tout en immobilisant l'organe de blocage 166 suivant la direction longitudinale X relativement au bâti 72.

Une autre différence réside encore dans le fait que la chambre de contrebalancement 214 n'est pas délimitée longitudinalement entre la première paroi 199A et la surface de guidage 164 et radialement entre le fond 195 de l'évidement 194 et la surface de blocage 162. A la place, la chambre de contrebalancement 214 est délimitée longitudinalement entre la première paroi 199A et une face 224 du piston de contrebalancement 212 distincte de la surface de guidage 164, et radialement entre le fond 195 et la paroi 220. La surface de guidage 164 et l'organe de blocage 166 sont disposés hors de la chambre de contrebalancement 214 ; en particulier, la pièce de guidage 163 et l'organe de blocage 166 sont chacun interposés entre ladite face 224 du piston 212 et l'organe de rappel 200. Cela évite que du fluide de commande ne s'immisce entre la face de blocage 182 et la surface de blocage 162, ce qui permet d'augmenter le coefficient d'adhérence entre l'organe de blocage 166 et la surface de blocage 162. Le verrouillage du dispositif de verrouillage 160 est ainsi plus efficace.

Enfin, le piston de contrebalancement 212 n'est pas solidaire de la pièce mobile 168. Il est simplement interposé entre la chambre de contrebalancement 214 et la pièce mobile 168, ce qui lui permet d'être maintenu en appui contre la pièce mobile 208 grâce aux pressions contraires exercées, d'une part, par le fluide présent dans la chambre 214 sur le piston 212 et, d'autre part, par l'organe de rappel 200 sur la pièce mobile 208, et donc de se déplacer conjointement avec la pièce mobile 208 suivant la direction de translation secondaire. On notera néanmoins que cette dernière différence est facultative et que le piston de contrebalancement 212 peut également être solidaire de la pièce mobile 168, comme dans les autres variantes.

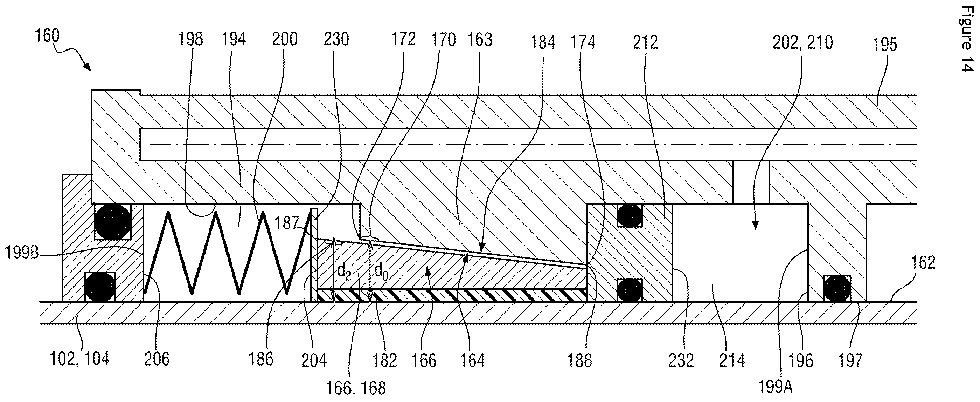

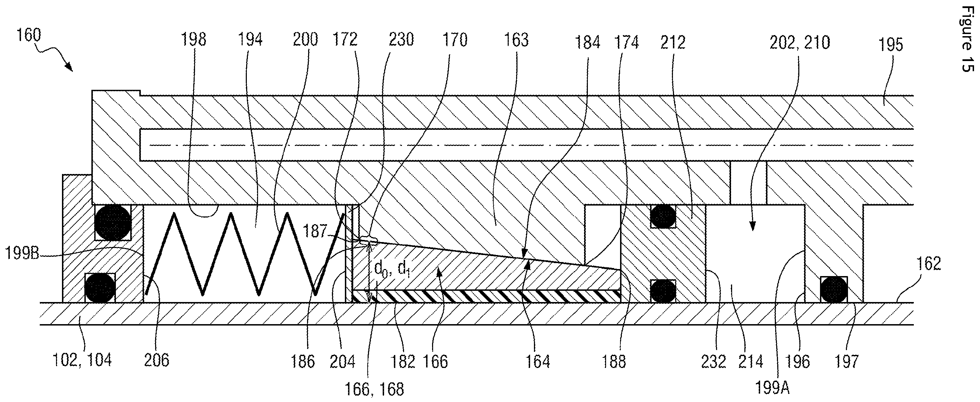

Une troisième variante de mise en œuvre du dispositif de verrouillage 160 est représentée sur les Figures 14 et 15, la Figure 14 présentant l'organe de blocage 166 et la surface de guidage 164 dans leur première configuration, la Figure 15 présentant l'organe de blocage 166 et la surface de guidage 164 dans leur deuxième configuration. Cette deuxième variante diffère de la première mise en œuvre décrite plus haut par plusieurs caractéristiques.

Tout d'abord, la pièce de guidage 163 est solidaire du bâti 72, la pièce mobile 168 étant constituée par l'organe de blocage 166.

Ensuite, l'épaulement 204 n'est pas porté par la pièce mobile 168. A la place, l'épaulement 204 est porté par une platine 230 interposée entre l'organe de rappel 200 et la pièce mobile 168. Cette platine 230 est sensiblement fixe en translation radialement. On notera néanmoins que cette platine 230 est facultative et que l'épaulement 204 peut également être porté par la pièce mobile 168 comme dans les autres variantes.

Une autre différence réside encore dans le fait que la chambre de contrebalancement 214 n'est pas délimitée longitudinalement entre la première paroi 199A et la surface de guidage 164. A la place, la chambre de contrebalancement 214 est délimitée longitudinalement entre la première paroi 199A et une face 232 du piston de contrebalancement 212 distincte de la surface de guidage 164. La surface de guidage 164 et l'organe de blocage 166 sont disposés hors de la chambre de contrebalancement 214 ; en particulier, la pièce de guidage 163 et l'organe de blocage 166 sont chacun interposés entre ladite face 232 du piston 212 et l'organe de rappel 200.

Une différence supplémentaire réside dans le fait que le piston de contrebalancement 212 n'est pas solidaire de la pièce mobile 168. Il est simplement interposé entre la chambre de contrebalancement 214 et la pièce mobile 168, ce qui lui permet d'être maintenu en appui contre la pièce mobile 208 grâce aux pressions contraires exercées, d'une part, par le fluide présent dans la chambre 214 sur le piston 212 et, d'autre part, par l'organe de rappel 200 sur la pièce mobile 208, et donc de se déplacer conjointement avec la pièce mobile 208 suivant la direction de translation secondaire.

Enfin, chaque segment 190 de l'organe de blocage 166 n'est pas lié au bâti par une liaison 193 portée par la première paroi 199A de l'évidement 194. A la place, chaque segment 190 est interposé longitudinalement entre la platine 230 et le piston 212, lesquels ont ainsi fonction de guide pour guider la translation radiale de chaque segment 190 relativement à la surface de blocage 162 tout en accompagnement le déplacement de l'organe de blocage 166 suivant la direction longitudinale X relativement au bâti 72.

Cette dernière variante est avantageuse en ce qu'elle permet la mise en sécurité de la soufflante 50 sans devoir réalimenter la chambre de contrebalancement 214. En effet, en cas d'augmentation de pression dans la chambre des grands pas 112, l'organe de blocage 166 va, via les forces d'adhérence, être sollicité à l'écart de la surface de guidage 164, réduisant ainsi les forces d'adhérence qui seront alors insuffisantes pour s'opposer au déplacement de la partie mobile 102 relativement à la partie fixe 100.

On notera que, bien que la description ci-dessus ait été donnée pour des exemples de réalisation dans lesquels la surface cylindrique 162 est mobile conjointement avec la partie mobile 102 relativement au bâti 72, l'invention ne se limite aucunement à ce seul cas. Ainsi, dans d'autres exemples de réalisation (non représentés), c'est l'organe de blocage 166 qui est mobile conjointement avec la partie mobile 102 relativement au bâti 72, la surface cylindrique 162 étant alors solidaire du bâti 72. L'homme du métier saura sans peine faire les adaptations nécessaires.

## Revendications

1. Mécanisme de changement de pas (70) pour ajuster une position angulaire d'au moins une aube à calage variable (56) d'une turbomachine d'aéronef (12) autour d'un axe (P) de pivotement de l'aube (56), ledit mécanisme de changement de pas (70) comprenant :
- un bâti (72) fixe relativement à l'axe de pivotement (P),
- un vérin de commande (74) comportant une partie fixe (100) solidaire du bâti (72) et une partie mobile (102),
- un système de liaison (78) reliant la partie mobile (102) à l'aube à calage variable (56) de sorte à convertir le mouvement de la partie mobile (102) relativement à la partie fixe (100) en une rotation de l'aube à calage variable (56) autour de l'axe de pivotement (P), et
- un dispositif de verrouillage de pas (160) propre à bloquer le mouvement de la partie mobile (102) relativement à la partie fixe (100) dans au moins un sens,
dans lequel le dispositif de verrouillage de pas (160) comprend :
- une surface de blocage (162) solidaire du bâti (72) ou mobile conjointement avec la partie mobile (102) relativement au bâti (72),
- une surface de guidage (164) faisant face à la surface de blocage (162) et comprenant une portion de surface (170) à une première distance (d₀), fixe, de la surface de blocage (162),
- un organe de blocage (166) interposé entre la surface de blocage (162) et la surface de guidage (164) et ayant une face de guidage (184) faisant face à la surface de guidage (164), ledit organe de blocage (166) présentant une configuration de déverrouillage à l'écart de la surface de blocage (162), dans laquelle une portion de face (186) de la face de guidage (184) est à une deuxième distance (d₂) de la surface de blocage (162), supérieure à la première distance (d₀), et une configuration de verrouillage en prise avec la surface de blocage (162) de sorte que la partie mobile (102) soit immobilisée relativement au bâti (72), dans laquelle la portion de face (186) est à la première distance (d₀) de la surface de blocage (162),
la surface de guidage (164) et l'organe de blocage (166) étant mobiles l'un relativement à l'autre parallèlement à la surface de blocage (162) entre une première configuration, dans laquelle la portion de surface (170) est à l'écart de la portion de face (186), et une deuxième configuration dans laquelle la portion de face (170) est en appui contre la portion de surface (186),
le dispositif de verrouillage de pas (160) comprenant encore :
- un organe de rappel (200) sollicitant la surface de guidage (164) ou l'organe de blocage (166) vers la deuxième configuration, et
- un dispositif de maintien (202) pour maintenir la surface de guidage (164) et l'organe de blocage (166) dans la première configuration sous certaines conditions prédéterminées,
dans lequel la surface de guidage (164) converge vers la surface de blocage (162) de sorte que, lorsque la surface de guidage (164) et l'organe de blocage (166) sont dans la deuxième configuration, la force du dispositif de rappel (200) sur la surface de guidage (164) ou l'organe de blocage (166) soit convertie en force d'appui de l'organe de blocage (166) sur la surface de blocage (162) par effet de coin, cela créant une force d'adhérence à l'interface entre l'organe de blocage (166) et la surface de blocage (162), le dispositif de rappel (200) étant dimensionné pour que ladite force d'adhérence bloque tout déplacement de la surface de blocage (162) relativement à l'organe de blocage (166).

2. Mécanisme de changement de pas (70) selon la revendication 1, dans lequel la surface de guidage (164) converge vers la surface de blocage (162) dans une première direction, l'organe de rappel (200) exerçant sur la surface de guidage (164) une force orientée dans une deuxième direction opposée à la première direction et/ou exerçant sur l'organe de blocage (166) une force orientée dans ladite première direction.

3. Mécanisme de changement de pas (70) selon la revendication 1 ou 2, dans lequel l'organe de blocage (166) comprend une face de blocage (182) faisant face à la surface de blocage (162), la face de guidage (184) convergeant vers ladite face de blocage (182).

4. Mécanisme de changement de pas (70) selon l'une quelconque des revendications précédentes, dans lequel la face de guidage (184) est sensiblement parallèle à la surface de guidage (164).

5. Mécanisme de changement de pas (70) selon l'une quelconque des revendications précédentes, dans lequel la surface de blocage (162) est cylindrique et l'organe de blocage (166) est annulaire et sensiblement coaxial à la surface de blocage (162), l'organe de blocage étant circonférentiellement divisé en plusieurs segments (190) mobiles les uns par rapport aux autres entre une configuration rapprochée, dans laquelle l'organe de blocage (166) a un diamètre réduit, et une configuration écartée, dans laquelle l'organe de blocage (166) a un diamètre augmenté, la configuration rapprochée constituant l'une des configurations de verrouillage et de déverrouillage de l'organe de blocage (166) et la configuration écartée constituant l'autre desdites configurations de verrouillage et de déverrouillage.

6. Mécanisme de changement de pas (70) selon l'une quelconque des revendications précédentes, dans lequel le dispositif de maintien (202) comprend un vérin de contrebalancement (210) avec une chambre de contrebalancement (214) en contact avec un piston (212) mobile conjointement avec la surface de guidage (164) ou l'organe de blocage (166), ladite chambre de contrebalancement (214) étant apte à recevoir un fluide sous pression pour contrebalancer la sollicitation du dispositif de rappel (200).

7. Mécanisme de changement de pas (70) selon l'une quelconque des revendications précédentes, dans lequel la partie fixe (100) et la partie mobile (102) délimitent entre elles deux chambres fluidiques (112, 114) agencées de sorte que l'augmentation d'une pression de fluide dans l'une des chambres fluidiques (112, 114) relativement à une pression de fluide dans l'autre chambre fluidique (112, 114) entraîne le mouvement de la partie mobile (102) relativement à la partie fixe (100), les conditions prédéterminées consistant en une pression d'alimentation des chambres fluidiques (112, 114) supérieure à un seuil, ledit seuil étant inférieur à une pression minimale d'alimentation des chambres fluidiques (112, 114) en conditions normales d'opération.

8. Rotor de soufflante (54) pour turbomachine comprenant un moyeu (55) et une pluralité d'aubes à calage variable (56) chacune pivotable relativement au moyeu (55) autour d'un axe de pivotement (P) propre, le rotor (54) comprenant en outre un mécanisme de changement de pas (70) selon l'une quelconque des revendications précédentes pour ajuster une position angulaire de chacune des aubes à calage variable (56) autour de son axe de pivotement (P) respectif.

9. Moteur à turbine à gaz (12) comprenant un rotor de soufflante (54) selon la revendication 8.

10. Aéronef (10) comprenant au moins un moteur à turbine à gaz (12) selon la revendication 9.

11. Procédé de changement du pas des aubes (56) d'un rotor de soufflante (54) pour turbomachine, chacune pivotable relativement à un moyeu (55) du rotor de soufflante (54) autour d'un axe de pivotement (P) propre, ledit procédé comprenant l'ajustement d'une position angulaire de chacune desdites aubes (56) autour de son axe de pivotement (P) respectif au moyen d'un mécanisme de changement de pas (70) selon l'une quelconque des revendications 1 à 7.

## Patentansprüche

1. Steigungsverstellmechanismus (70) zur Einstellung einer Winkelposition mindestens einer Schaufel mit veränderbarer Einstellung (56) einer Turbomaschine (12) eines Luftfahrzeugs um eine Schwenkachse (P) der Schaufel (56), wobei der Steigungsverstellmechanismus (70) umfasst:
- ein Gehäuse (72), das relativ zu der Schwenkachse (P) fest ist,
- einen Stellzylinder (74), der einen festen Teil (100), welcher mit dem Gehäuse (72) fest verbunden ist, und einen beweglichen Teil (102) aufweist,
- ein Verbindungssystem (78), das den beweglichen Teil (102) mit der Schaufel mit veränderbarer Einstellung (56) verbindet, um die Bewegung des beweglichen Teils (102) relativ zu dem festen Teil (100) in eine Drehung der Schaufel mit veränderbarer Einstellung (56) um die Schwenkachse (P) umzuwandeln, und
- eine Steigungsverriegelungsvorrichtung (160), die geeignet ist, die Bewegung des beweglichen Teils (102) relativ zu dem festen Teil (100) in mindestens einer Richtung zu blockieren,
wobei die Steigungsverriegelungsvorrichtung (160) umfasst:
- eine Blockierfläche (162), die mit dem Gehäuse (72) fest verbunden oder gemeinsam mit dem beweglichen Teil (102) relativ zu dem Gehäuse (72) beweglich ist,
- eine Führungsfläche (164), die der Blockierfläche (162) zugewandt ist und einen Oberflächenabschnitt (170) in einem ersten, festen Abstand (d₀) von der Blockierfläche (162) umfasst,
- ein Blockierelement (166), das zwischen der Blockierfläche (162) und der Führungsfläche (164) angeordnet ist und eine Führungsseite (184) aufweist, die der Führungsfläche (164) zugewandt ist, wobei das Blockierelement (166) eine Entriegelungskonfiguration beabstandet von der Blockierfläche (162) aufweist, in welcher ein Seitenabschnitt (186) der Führungsseite (184) in einem zweiten Abstand (d₂) von der Blockierfläche (162) ist, der größer als der erste Abstand (d₀) ist, und eine Verriegelungskonfiguration im Eingriff mit der Blockierfläche (162), so dass der bewegliche Teil (102) relativ zu dem Gehäuse (72) arretiert ist, in welcher der Seitenabschnitt (186) in dem ersten Abstand (d₀) von der Blockierfläche (162) ist,
wobei die Führungsfläche (164) und das Blockierelement (166) parallel zu der Blockierfläche (162) relativ zueinander zwischen einer ersten Konfiguration, in welcher der Oberflächenabschnitt (170) von dem Seitenabschnitt (186) beabstandet ist, und einer zweiten Konfiguration, in welcher der Oberflächenabschnitt (170) an dem Seitenabschnitt (186) anliegt, beweglich sind,
wobei die Steigungsverriegelungsvorrichtung (160) weiterhin umfasst:
- ein Rückstellelement (200), welches die Führungsfläche (164) oder das Blockierelement (166) in die zweite Konfiguration beaufschlagt, und
- eine Haltevorrichtung (202), um die Führungsfläche (164) und das Blockierelement (166) unter bestimmten vorbestimmten Bedingungen in der ersten Konfiguration zu halten,
wobei die Führungsfläche (164) in Richtung der Blockierfläche (162) konvergiert, so dass, wenn sich die Führungsfläche (164) und das Blockierelement (166) in der zweiten Konfiguration befinden, die Kraft des Rückstellelements (200) auf die Führungsfläche (164) oder das Blockierelement (166) durch Keilwirkung in eine Anpresskraft des Blockierelements (166) auf die Blockierfläche (162) umgewandelt wird, wodurch eine Haftkraft an der Grenzfläche zwischen dem Blockierelement (166) und der Blockierfläche (162) erzeugt wird, wobei die Rückstellvorrichtung (200) so bemessen ist, dass die Haftkraft jegliche Verschiebung der Blockierfläche (162) relativ zu dem Blockierelement (166) blockiert.

2. Steigungsverstellmechanismus (70) nach Anspruch 1, wobei die Führungsfläche (164) in einer ersten Richtung auf die Blockierfläche (162) zu konvergiert, wobei das Rückstellelement (200) auf die Führungsfläche (164) eine Kraft ausübt, die in eine zweite, der ersten Richtung entgegengesetzte Richtung gerichtet ist, und/oder auf das Blockierelement (166) eine Kraft ausübt, die in die erste Richtung gerichtet ist.

3. Steigungsverstellmechanismus (70) nach Anspruch 1 oder 2, wobei das Blockierelement (166) eine Blockierseite (182) umfasst, die der Blockierfläche (162) zugewandt ist, wobei die Führungsseite (184) in Richtung der Blockierseite (182) konvergiert.

4. Steigungsverstellmechanismus (70) nach einem der vorhergehenden Ansprüche, wobei die Führungsseite (184) im Wesentlichen parallel zu der Führungsfläche (164) verläuft.

5. Steigungsverstellmechanismus (70) nach einem der vorhergehenden Ansprüche, wobei die Blockierfläche (162) zylindrisch ist und das Blockierelement (166) ringförmig und im Wesentlichen koaxial zu der Blockierfläche (162) ist, wobei das Blockierelement in Umfangsrichtung in mehrere Segmente (190) unterteilt ist, die relativ zueinander zwischen einer angenäherten Konfiguration, in welcher das Blockierelement (166) einen verringerten Durchmesser aufweist, und einer beabstandeten Konfiguration, in welcher das Blockierelement (166) einen vergrößerten Durchmesser aufweist, beweglich sind, wobei die angenäherte Konfiguration eine von der Verriegelungs- und Entriegelungskonfiguration des Blockierelements (166) bildet und die beabstandete Konfiguration die andere von der Verriegelungs- und Entriegelungskonfiguration bildet.

6. Steigungsverstellmechanismus (70) nach einem der vorhergehenden Ansprüche, wobei die Haltevorrichtung (202) einen Ausgleichszylinder (210) mit einer Ausgleichskammer (214) in Kontakt mit einem Kolben (212) umfasst, der gemeinsam mit der Führungsfläche (164) oder dem Blockierelement (166) beweglich ist, wobei die Ausgleichskammer (214) in der Lage ist, ein unter Druck stehendes Fluid aufzunehmen, um die Beaufschlagung des Rückstellelements (200) auszugleichen.

7. Steigungsverstellmechanismus (70) nach einem der vorhergehenden Ansprüche, wobei der feste Teil (100) und der bewegliche Teil (102) zwischen sich zwei Fluidkammern (112, 114) begrenzen, die so angeordnet sind, dass die Erhöhung eines Fluiddrucks in einer der Fluidkammern (112, 114) relativ zu einem Fluiddruck in der anderen Fluidkammer (112, 114) die Bewegung des beweglichen Teils (102) relativ zu dem festen Teil (100) bewirkt, wobei die vorbestimmten Bedingungen aus einem Versorgungsdruck der Fluidkammern (112, 114) über einem Schwellenwert bestehen, wobei der Schwellenwert niedriger als ein Mindestversorgungsdruck der Fluidkammern (112, 114) unter normalen Betriebsbedingungen ist.

8. Gebläserotor (54) für eine Turbomaschine, umfassend eine Nabe (55) und eine Vielzahl von Schaufeln mit veränderbarer Einstellung (56), die jeweils relativ zu der Nabe (55) um eine eigene Schwenkachse (P) schwenkbar sind, wobei der Rotor (54) ferner einen Steigungsverstellmechanismus (70) nach einem der vorhergehenden Ansprüche umfasst, um eine Winkelposition jeder der Schaufeln mit veränderbarer Einstellung (56) um ihre jeweilige Schwenkachse (P) einzustellen.

9. Gasturbinentriebwerk (12), umfassend einen Gebläserotor (54) nach Anspruch 8.

10. Luftfahrzeug (10), umfassend mindestens ein Gasturbinentriebwerk (12) nach Anspruch 9.

11. Verfahren zum Verstellen der Steigung von Schaufeln (56) eines Gebläserotors (54) für eine Turbomaschine, die jeweils relativ zu einer Nabe (55) des Gebläserotors (54) um eine eigene Schwenkachse (P) schwenkbar sind, wobei das Verfahren das Einstellen einer Winkelposition jeder der Schaufeln (56) um ihre jeweilige Schwenkachse (P) mittels eines Steigungsverstellmechanismus (70) nach einem der Ansprüche 1 bis 7 umfasst.

## Claims

1. A pitch-change mechanism (70) for adjusting an angular position of at least one variable-setting blade (56) of an aircraft turbomachine (12) around a pivot axis (P) of the blade (56), said pitch-change mechanism (70) comprising:
- a frame (72) fixed relative to the pivot axis (P),
- a control actuator (74) including a fixed part (100) integral with the frame (72) and a moving part (102),
- a connecting system (78) connecting the moving part (102) to the variable-setting blade (56) so as to convert the movement of the moving part (102) relative to the fixed part (100) into a rotation of the variable-setting blade (56) around the pivot axis (P), and
- a pitch locking device (160) suitable for blocking the movement of the moving part (102) relative to the fixed part (100) in at least one direction,
wherein the pitch locking device (160) comprises:
- a blocking surface (162) integral with the frame (72) or movable jointly with the moving part (102) relative to the frame (72),
- a guide surface (164) facing the blocking surface (162) and comprising a surface portion (170) at a fixed first distance (d₀) from the blocking surface (162),
- a blocking member (166) interposed between the blocking surface (162) and the guide surface (164) and having a guide face (184) facing the guide surface (164), said blocking member (166) having an unlocking configuration spaced from the blocking surface (162), in which a face portion (186) of the guide face (184) is at a second distance (d₂) from the blocking surface (162), greater than the first distance (d₀), and a locking configuration engaged with the blocking surface (162) so that the moving part (102) is immobilized relative to the frame (72), in which the face portion (186) is at the first distance (d₀) from the blocking surface (162),
the guide surface (164) and the blocking member (166) being movable relative to each other parallel to the blocking surface (162) between a first configuration, in which the surface portion (170) is spaced from the face portion (186), and a second configuration in which the face portion (170) bears against the surface portion (186),
the pitch locking device (160) further comprising:
- a biasing member (200) which urges the guide surface (164) or the blocking member (166) toward the second configuration, and
- a holding device (202) for holding the guide surface (164) and the blocking member (166) in the first configuration under certain predetermined conditions,
wherein the guide surface (164) converges toward the blocking surface (162) so that, when the guide surface (164) and the blocking member (166) are in the second configuration, the force of the biasing device (200) on the guide surface (164) or the blocking member (166) is converted into a force of pressing the blocking member (166) on the blocking surface (162) by wedge effect, this creating an adhesion force at the interface between the blocking member (166) and the blocking surface (162), the biasing device (200) being dimensioned so that said adhesion force blocks any movement of the blocking surface (162) relative to the blocking member (166).

2. The pitch-change mechanism (70) according to claim 1, wherein the guide surface (164) converges toward the blocking surface (162) in a first direction, the biasing member (200) exerting on the guide surface (164) a force oriented in a second direction opposite to the first direction and/or exerting on the blocking member (166) a force oriented in said first direction.

3. The pitch-change mechanism (70) according to claim 1 or 2, wherein the blocking member (166) comprises a blocking face (182) facing the blocking surface (162), the guide face (184) converging toward said blocking face (182).

4. The pitch-change mechanism (70) according to any one of the preceding claims, wherein the guide face (184) is substantially parallel to the guide surface (164).

5. The pitch-change mechanism (70) according to any one of the preceding claims, wherein the blocking surface (162) is cylindrical and the blocking member (166) is annular and substantially coaxial with the blocking surface (162), the blocking member being circumferentially divided into several segments (190) movable relative to each other between a close configuration, in which the blocking member (166) has a reduced diameter, and a spaced configuration, in which the blocking member (166) has an increased diameter, the close configuration constituting one of the locking and unlocking configurations of the blocking member (166) and the spaced configuration constituting the other of said locking and unlocking configurations.

6. The pitch-change mechanism (70) according to any one of the preceding claims, wherein the holding device (202) comprises a counterbalancing actuator (210) with a counterbalancing chamber (214) in contact with a piston (212) movable together with the guide surface (164) or the blocking member (166), said counterbalancing chamber (214) being capable of receiving a pressurized fluid to counterbalance the urge of the biasing device (200).

7. The pitch-change mechanism (70) according to any one of the preceding claims, wherein the fixed portion (100) and the movable portion (102) define therebetween two fluid chambers (112, 114) arranged so that an increase in a fluid pressure in one of the fluid chambers (112, 114) relative to a fluid pressure in the other fluid chamber (112, 114) causes the movable portion (102) to move relative to the fixed portion (100), the predetermined conditions consisting of a supply pressure of the fluid chambers (112, 114) greater than a threshold, said threshold being lower than a minimum supply pressure of the fluid chambers (112, 114) under normal operating conditions.

8. A fan rotor (54) for a turbomachine comprising a hub (55) and a plurality of variable-setting blades (56) each pivotable relative to the hub (55) around a specific pivot axis (P), the rotor (54) further comprising a pitch-change mechanism (70) according to any one of the preceding claims for adjusting an angular position of each of the variable-setting blades (56) around its respective pivot axis (P).

9. A gas turbine engine (12) comprising a fan rotor (54) according to claim 8.

10. An aircraft (10) comprising at least one gas turbine engine (12) according to claim 9.

11. A method for changing the pitch of the blades (56) of a fan rotor (54) for a turbomachine, each pivotable relative to a hub (55) of the fan rotor (54) around a specific pivot axis (P), said method comprising adjusting an angular position of each of said blades (56) around its respective pivot axis (P) by means of a pitch changing mechanism (70) according to any one of claims 1 to 7.
